# EUROPEAN PATENT APPLICATION

(11) **EP 4 763 810 A1**
(43) Date of publication of application: **24.06.2026**
(21) Application number: 24221629.9
(22) Date of filing: 19.12.2024
(51) Int. Cl.: C02F 1/42

(54) **LIQUID TREATMENT CARTRIDGE AND SYSTEM**

(71) Applicant: BRITA SE, 65232 Taunusstein (DE)
(72) Inventor: Bernard, Dominik, 65232 Taunusstein (DE); Hartmann, Tim, 65232 Taunusstein (DE)

(57) **Abstract**

A liquid treatment cartridge comprises a housing comprising a capping part (18;78;112,113) and a vessel-forming part (19;79;110), joined to each other to enclose a housing interior (20;80;111;111'). The housing comprises a laterally protruding circumferential rim (23;84;118;139). At least the vessel-forming part (19;79;110) is placeable in a cartridge-receiving chamber (11;55;66;104) of a liquid treatment system (1) such that the rim (23;84;118;139) engages a co-operating part (26;59;77) of the liquid treatment system (1) along a surface (25;141,142) of engagement of the rim (23;84;118;139) to prevent a flow of liquid through a mouth (15;57;68) of the cartridge-receiving chamber (11;55;66;104) past the housing of the liquid treatment cartridge. The surface (25;141,142) of engagement extends in a loop around an axis (21,81;114;114') of the housing extending from an axial end of the housing at which the capping part (18;78;112,113) is provided to an opposite axial end of the housing. The surface (25;141,142) of engagement encloses part of an exterior surface of the housing. The capping part (18;78;112,113) comprises at least one liquid inlet for entry of liquid into the housing interior (20;80;111;111') through the enclosed exterior surface part. The housing comprises at least one venting channel, having at least one inlet (41;95a,b;132;145) for gas through the exterior surface at the rim (23;84;139) and at least one outlet (50;96a,b;130) for gas. The at least one inlets (41;95a,b;132;145) for gas are located outside the enclosed part of the exterior surface. The at least one outlets (50;96a,b;130) for gas are separated from the enclosed part of the exterior surface by at least one of the surface (25;141,142) of engagement and the housing.

## Description

The invention relates to a liquid treatment cartridge, comprising
a housing comprising a capping part and a vessel-forming part, joined to each other to enclose a housing interior,
wherein the housing comprises a laterally protruding circumferential rim,
wherein at least the vessel-forming part is placeable in a cartridge-receiving chamber of a liquid treatment system such that the rim engages a co-operating part of the liquid treatment system along a surface of engagement of the rim to prevent a flow of liquid through a mouth of the cartridge-receiving chamber past the housing of the liquid treatment cartridge,
wherein the surface of engagement extends in a loop around an axis of the housing extending from an axial end of the housing at which the capping part is provided to an opposite axial end of the housing,
wherein the surface of engagement encloses part of an exterior surface of the housing,
wherein the capping part comprises at least one liquid inlet for entry of liquid into the housing interior through the enclosed exterior surface part,
wherein the housing comprises at least one venting channel, having at least one inlet for gas through the exterior surface at the rim and at least one outlet for gas, and
wherein the at least one inlets for gas are located outside the enclosed part of the exterior surface.

The invention also relates to a liquid treatment system.

WO 2012/168896 A1 discloses a percolating filter device of the type in which there is an outer housing, for example a jug-shaped housing, in which a divider element is suspended by means of a flanged support and separates a first container for receiving water to be filtered from a second container for receiving filtered water. A flow path for the water to be filtered is defined in the divider element and extends between the first and second containers through first and second filter means, which are arranged in sequence and through which the water passes by gravity. The first filter means comprise a replaceable filter cartridge. The filter cartridge comprises an upper portion and a lower portion, which are joined together in the region of a peripheral rim that projects radially outwards and constitutes a seal by which the filter cartridge is fitted sealingly in a mouth of a seat formed in the base of the divider element. A chamber is defined between the seat and the casing of the lower portion of the filter cartridge. Venting means are provided for venting the air or gasses trapped in the chamber and thus improving the flow of water through the bed of the filter cartridge. In a variant, the chamber is vented through a conduit extending between the venting chamber and the upper container for receiving the water to be filtered. The conduit is constituted by a calibrated recess formed in the coupling region between shells of the cartridge and of its seat in the divider element, in the region of the mouth, and may be formed purely in the divider element, purely in the peripheral rim of the filter cartridge or partially in one of the two components and partially in the other. In the second case, the conduit consists of a simple calibrated hole extending through the peripheral rim of the filter cartridge.

A problem of the disclosed alternatives is that venting against the pressure of the untreated water in the upper container is a relatively slow process and thus not very effective.

It is an object of the invention to provide a liquid treatment cartridge and liquid treatment system of the types defined above in the opening paragraphs that provide for more effective venting of the cartridge-receiving chamber once the cartridge has been inserted.

This object is achieved according to a first aspect by the liquid treatment cartridge according to the invention, which is characterised in that the at least one outlets for gas are separated from the enclosed part of the exterior surface by at least one of the surface of engagement and the housing.

The liquid treatment cartridge comprises a housing. The housing need not be completely dimensionally stable. Some or all of the housing may be dimensionally unstable, so that this part or these parts are not self-supporting. The capping part and the vessel-forming part need not be the only parts forming the housing, nor need they each be made in one piece. The capping part and the vessel-forming part are joined to each other. The joint may in particular be a permanent joint permitting only irreversible detachment. Alternatively, the joint may be based on an interference or friction fit. In any case, the joint permits the housing to be handled by only the capping part or the vessel-forming part, facilitating placement of the liquid treatment cartridge in an operational position in which the rim engages a co-operating part of the liquid treatment system along a surface of engagement. Furthermore, the joint will generally be liquid-tight along at least a majority of the extent of the joint. This obviates the need for a user to position a separate sealing element between the capping part and the vessel-forming part. Generally, there also need not be an integral sealing element interposed between a body of one of the capping-part and the vessel-forming part and the other of the capping part and the vessel-forming part. This saves material and facilitates recycling at the end of the useful lifetime of the liquid treatment cartridge, since such a sealing element will generally be made of a different, more elastic material than the body.

The capping part comprises at least one liquid inlet for entry of liquid into the housing interior. Such a liquid inlet need not be an aperture, but is pervious to liquid. The vessel-forming part is at least in parts pervious to liquid to allow liquid to leave the housing interior. The vessel-forming part may be completely liquid-pervious or liquid-pervious over a majority of the surface area of the vessel-forming part, e.g. made of or comprising a mesh or moulded porous material. Alternatively, the vessel-forming part may be impervious to liquid but for one or more liquid outlets that are pervious to liquid.

The housing further comprises a laterally protruding circumferential rim, also referred to herein as sealing rim, e.g. at the capping part. This rim may be an integral part of the capping part, an integral part of the vessel-forming part, a part comprising parts of at least one of the capping part and the vessel-forming part, and optionally a further part joined to at least one of the capping part and the vessel-forming part, e.g. as reinforcement. At least the rim will generally be dimensionally stable. The rim will generally be elastically deformable. The rim protrudes laterally with respect to at least a side wall of the housing, e.g. a side wall that is also a side wall of the vessel-forming part. In that case, the rim lies entirely radially outwards of the exterior surface of the side wall with respect to which the rim protrudes.

At least the vessel-forming part is placeable in a cartridge-receiving chamber provided at a bottom of a reservoir of a liquid treatment system. The capping part, or part thereof, may protrude into the reservoir. The reservoir is defined by a container to which the cartridge-receiving chamber is joined or of which the cartridge-receiving chamber is an integral part. Such a container may be funnel-shaped, for example. The placement is such that the rim engages a co-operating part of the liquid treatment system along a surface of engagement of the rim to prevent a flow of liquid through a mouth of the cartridge-receiving chamber past the housing of the liquid treatment cartridge. That is to say that there is a surface section shaped in effect as a ribbon that forms a (closed) loop. The surface of engagement may be a lateral circumferential surface of the rim, which may be conical. The surface of engagement may also be a section of an axially facing surface of the rim, where the axis is an axis of the housing defined such that the capping part is at one axial end of the housing and the end of the vessel-forming part distal to the capping part is at the opposite axial end. The surface of engagement will extend in a loop around a central part of the capping part, seen in axial direction. The surface of engagement may, however, be axially displaced with respect to the capping part, e.g. if the rim is an integral part of the vessel-forming part. The loop is a closed loop, barring non-functional interruptions that do not affect the sealing function, e.g. scratches in the surfaces or the like.

The surface of engagement encloses and bounds a part of the exterior surface of the housing. An effect is to sub-divide the exterior surface into the enclosed part, which is exposed to untreated liquid, in use, and a remainder, on a downstream side of the surface of engagement, in use.

The housing comprises at least one venting channel. Venting channels may be interconnected such that the inlets for gas are inlets of the network of interconnected venting channels and the outlets are outlets of the network of interconnected venting channels. The inlets for gas are inlets through the exterior surface, meaning that a venting channel terminates at an inlet aperture in the exterior surface and at least a section of the at least one venting channels is formed in a structural part of the housing, e.g. a wall part. At least a section of the venting channels may for example extend through the rim, in other words be formed in the rim. It is thus possible to separate the inlet(s) for gas from the outlet(s) for gas. The inlet(s) for gas lie(s) outside the part of the exterior surface of the housing enclosed by the surface of engagement. In particular, the inlet(s) for gas may be formed in a surface of the rim that is on a same side of the rim as the vessel-forming part and an opposite side of the rim as the capping part, seen in axial direction. Alternatively, the inlet(s) for gas may be formed in an outer edge of the protruding rim. As another alternative, the inlet(s) for gas may comprise an inlet through an exterior surface of a side wall of the housing with respect to which the rim protrudes laterally, but immediately adjacent to the rim, e.g. such that a section of an edge of the inlet aperture is defined by the rim. In each case, the inlet(s) for gas is or are open to a space between a side wall of the vessel-forming part and a side wall of the cartridge-receiving chamber. A liquid outlet will generally be at a bottom of the cartridge-receiving chamber, in particular in a bottom wall, so that gas could accumulate in the space between the side wall of the vessel-forming part and the side wall of the cartridge-receiving chamber. This gas can enter the venting channel or channels, because the inlet(s) for gas are at, e.g. in, the rim. This is at the top of the space between the side wall of the vessel-forming part and the side wall of the cartridge-receiving chamber, where the gas accumulates.

The separation of the at least one outlets for gas of the at least one venting channels by at least one of the surface of engagement and (impermeable material of) the housing ensures that the at least one outlets for gas lie outside the enclosed exterior surface part of the housing. They are thus located on the downstream side of the cartridge, when in place in the liquid treatment system. Venting is thus into either atmosphere or the treated liquid flowing out of the cartridge due to the gravitational pull. In either case, venting is not against the pressure of the untreated liquid.

It is observed that JP 2014-138929 A discloses a water purification cartridge and a water purification device. The water purification cartridge includes a lid in which a water inflow section through which raw water flows is formed and a casing main body in which a water outflow section through which raw water flows out is formed. In a mounted state, the lid is mounted above the casing main body. A filling section that can be filled with activated carbon and is moulded into a hollow cylindrical shape is formed between the water inflow section and the water outflow section. An air vent path has a filler-portion-side opening formed in a filler-portion-side end surface of the lid as an air-inflow-side end portion thereof, and, as an air-outflow-side end portion thereof, a lateral side opening is formed in the lateral side end face of the lid. The lid is not joined to the moulded activated carbon, but only to the casing main body, which forms a cartridge-receiving chamber for the moulded activated carbon. As a result, it is necessary to provide an annular elastic member between a cover-side end face of the moulded activated carbon and a filling-portion-side end face of the lid, in addition to a seal between the lid and a raw water storage section. There are thus two seals that have to be effective to prevent a bypass of untreated liquid. Moreover, for effective sealing, the moulded activated carbon has to be provided with an elastic member supported by a stepped portion of the casing. The moulded activated carbon has to be relatively stiff, such that the lid and stepped portion can exert a clamping force to compress the annular elastic member that is located between the cover-side end face of the moulded activated carbon and the filling-portion side end face of the lid. This means that the moulded activated carbon has to comprise a relatively large amount of binder. The binder is not particularly effective in water treatment but does impose substantial material requirements.

In an embodiment, at least one of the at least one venting channels extends through at least one part of the housing to at least one outlet at the axial end of the housing opposite the axial end at which the capping part is provided.

An effect is to achieve relatively reliable separation between the at least one inlet for gas and the at least one outlet for gas. Furthermore, the gas can easily be discharged into either the treated liquid, and thus entrained, or even a head space above a volume of treated liquid collected in a vessel or tank.

In an embodiment, at least a section of at least one wall of the housing is porous.

As a result, less material is required to manufacture the housing of the liquid treatment cartridge. A weight-saving may also be achieved. Overall, the carbon footprint of the liquid treatment cartridge is reduced.

In an embodiment of the liquid treatment cartridge, the housing comprises at least one sheet comprising at least one membrane, and the sheet forms at least a section of a wall of the housing.

The at least one membrane may be a single membrane or a laminate of membranes. Where the sheet forms a wall section, only the sheet separates the housing interior from an exterior of the housing of the liquid treatment cartridge. The sheet is flexible, at least prior to being incorporated into the housing. Compared to a rigid housing component, the sheet requires relatively little material. The sheet may be liquid-pervious, e.g. because the at least one membranes are porous membranes. This need not necessarily be the case, however. The term is used here generally to denote a thin pliable sheet-like structure.

In an example of any embodiment in which at least a section of at least one wall of the housing is porous, the housing comprises at least one sheet comprising at least one membrane, and the sheet forms at least a section of a wall of the housing, at least one of the at least one sheets is liquid-pervious.

In this way, relatively high throughput can be achieved by means of a liquid outlet or outlets with a relatively large surface area. The at least one liquid-pervious sheets act as filters. This in turn allows for the provision of a bed of relatively fine particulate treatment medium in the housing interior. Compared with a filter block, which usually comprise a substantial amount of binder, the liquid-pervious sheet comprising at least one membrane requires relatively little non-functional material.

In an example of any embodiment in which the housing comprises at least one sheet comprising at least one membrane, and the sheet forms at least a section of a wall of the housing, the at least one sheets comprise at least one sheet closed on itself around the axis to form a lateral circumferential wall of the housing.

This allows relatively large savings in housing material to be achieved. In addition, throughput can be relatively high, or at least the resistance to flow due to the housing can be decreased, if the at least one sheets are liquid-pervious. The space in the cartridge-receiving chamber around the cartridge housing is vented relatively effectively, so that, if the at least one sheets forming the lateral circumferential wall are also liquid-pervious, the risk of non-uniform outflow is reduced.

In an example of any embodiment in which the housing comprises at least one sheet comprising at least one membrane, and the sheet forms at least a section of a wall of the housing, the housing comprises at least one support part, which is self-supporting, and at least one of the sheets is mounted along at least part of an edge of the sheet to at least one of (i) at least one of the at least one support parts and (ii) a part fixed to and covering a surface of at least one of the at least one support parts.

The at least one support parts are self-supporting, so that they retain their shape. They at least return to this shape on elastic deformation, whereas the at least one sheets are pliable and thus do not retain their shape when deformed. In this embodiment, the cartridge housing retains its shape. The at least one sheets cannot sag against a wall of the cartridge-receiving chamber. This is of use where the at least one sheets comprise at least one liquid-pervious sheet. Flows of liquid through the at least one sheet are not impeded. It is also of use in ensuring that the space around the liquid treatment cartridge is not obstructed so as to prevent gases from reaching the at least one gas inlet. Furthermore, it is possible to transmit forces through the housing of the liquid treatment cartridge, e.g. clamping or generally holding forces. It is observed that the capping part may be amongst the at least one support parts.

If the sheet is mounted to a part fixed to and covering a surface of at least one of the at least one support parts, the same effects are achieved without the part fixed to and covering the surface of at least one of the at least one support parts having to be a rigid part.

In a particular example of this embodiment, the at least one support parts comprise a base part located at the opposite axial end of the housing to the axial end of the housing at which the capping part is provided.

In this example, it is possible to suspend the liquid treatment cartridge with the axial end of the housing opposite the axial end at which the capping part is provided being unsupported by the cartridge-receiving chamber and still prevent the, in use lower, end of the cartridge housing from sagging in the middle. This improves uniformity of flow in the axial direction, and uniformity of treatment. Furthermore the cartridge-receiving chamber can have a central outlet opening above which the liquid treatment cartridge is suspended. The risk that a bottom wall of the cartridge sags and blocks such a central outlet opening is minimised.

In a particular example of this embodiment, at least one of the at least one sheets is mounted along an edge of the sheet to at least one of the base part and a part fixed to and covering a surface of the base part.

The sheet may be liquid-pervious and mounted across an opening through the base part.

Thus, a liquid outlet is provided at each opening. Manufacturing is relatively simple compared with providing a grating in a rigid housing.

Where the at least one sheets comprise a sheet closed on itself around the axis to form a lateral wall of the housing, an edge of the sheet at an axial end distal to the capping part may be mounted to the base part. Where the at least one sheets comprise a sheet closed on itself around the axis to form a lateral wall of the housing, an edge at the axial end proximal to the capping part may be mounted to the same support part as the base part, another one of the support parts or the capping part. Thus, the sheet forming the lateral wall of the housing can be relatively flexible, but will flex to only a limited extent in radial direction, even under pressure of liquid in the housing interior.

In an example of any embodiment in which the housing comprises at least one sheet comprising at least one membrane, the sheet forms at least a section of a wall of the housing, the housing comprises at least one support part, which is self-supporting, and at least one of the sheets is mounted along at least part of an edge of the sheet to at least one of (i) at least one of the at least one support parts and (ii) a part fixed to and covering a surface of at least one of the at least one support parts, the at least one support parts comprise at least one support part comprising at least one strut extending in axial direction over a majority of an axial extent of the housing.

It is thus possible to transmit axially directed forces through the housing without providing the entire cartridge housing with rigid walls. Furthermore, the axial dimension of the housing is essentially fixed.

In an example of this embodiment in which the at least one support parts comprise a base part located at the opposite axial end of the housing to the axial end of the housing at which the capping part is provided, the support part comprising the at least one strut further comprises the base part.

This helps keep the number of support parts relatively low, so that assembly of the cartridge housing can be effected with relatively little effort.

In an example of any embodiment in which the housing comprises at least one sheet comprising at least one membrane, the sheet forms at least a section of a wall of the housing, the housing comprises at least one support part, which is self-supporting, and at least one of the sheets is mounted along at least part of an edge of the sheet to at least one of (i) at least one of the at least one support parts and (ii) a part fixed to and covering a surface of at least one of the at least one support parts, the at least one support parts comprise a base part located at the opposite axial end of the housing to the axial end of the housing at which the capping part is provided, and the at least one support parts comprise at least one support part comprising at least one strut extending in axial direction over a majority of an axial extent of the housing, the base part comprises a first support part rim, closed on itself around the axis, wherein one of the support parts comprises a second support part rim closed on itself around the axis and located at an axial end of the housing proximal to the capping part, and wherein the at least one strut(s) interconnect(s) the first support part rim and the second support part rim.

The second support part rim defines the shape of the cartridge housing at the axial end opposite the axial end at which the capping part is provided relatively accurately, even where the majority of the surface of the cartridge housing is defined by the sheets comprising at least one membrane.

In a particular example of this embodiment, the at least one struts comprise a plurality of struts distributed along the first and second support part rims.

The struts are less vulnerable to twisting, in particular at their axial ends, than if there were to be only one strut.

In an example of any embodiment in which the housing comprises at least one sheet comprising at least one membrane, the sheet forms at least a section of a wall of the housing, the housing comprises at least one support part, which is self-supporting, and at least one of the sheets is mounted along at least part of an edge of the sheet to at least one of (i) at least one of the at least one support parts and (ii) a part fixed to and covering a surface of at least one of the at least one support parts, and the at least one support parts comprise at least one support part comprising at least one strut extending in axial direction over a majority of an axial extent of the housing, at least one of the at least one struts has a hollow interior forming at least a section of at least one of the at least one venting channels.

Thus, it is possible to conduct gases from the at least one inlet for gas to at least one of the at least one outlets for gas over a relatively long distance in axial direction. The housing is still relatively easy to produce with relatively little material, e.g. compared to providing a double-walled housing or the like.

In an example of this embodiment in which the at least one support parts comprise a base part located at the opposite axial end of the housing to the axial end of the housing at which the capping part is provided, the base part further comprises a central part and at least one spoke, interconnecting the central part and the first support part rim, and at least one of the at least one spokes has a hollow interior forming a section of at least one of the at least one venting channels and fluidly connected to the section formed in one of the at least one struts.

Generally, cartridge-receiving chambers of liquid treatment systems are provided with one central outlet opening for liquid. In this embodiment, the outlet for gas can be relatively close to this outlet opening for liquid. There is no need to conduct the gases through ports in side walls of the cartridge-receiving chamber. There is relatively little risk of the gas returning to the space from which the gas was vented.

Thus, in a particular example of this embodiment, the venting channel of which a section is formed by the hollow interior of the spoke has at least one outlet formed in the central part.

Any embodiment of the liquid treatment cartridge may comprise at least one protruding nipple, e.g. protruding in an axial direction towards the axial end of the housing opposite the axial end of the housing at which the capping part is provided, for insertion into a venting passage formed in a wall of the cartridge-receiving chamber, wherein at least one of the at least one outlets is formed in one of the at least one protruding nipples.

Thus, parts of the liquid treatment cartridge housing and of the liquid treatment system part defining the cartridge-receiving chamber interact to allow liquid to be vented completely out of the cartridge-receiving chamber. The at least one protruding nipple and the venting passage also co-operate to orient the cartridge with respect to the cartridge-receiving chamber. The nipple may engage the interior surface of the venting passage to provide a seal without need for further sealing elements.

In an example of this embodiment, the at least one protruding nipples protrude from the rim.

Since engagement between the housing of the liquid treatment cartridge and the seat for receiving the liquid treatment cartridge is in any case required at this location to close the mouth of the cartridge-receiving chamber, it is expedient also to provide the protruding nipples there. The rest of the housing of the liquid treatment cartridge can be spaced from the walls of the cartridge-receiving chamber, if desired.

In an embodiment of the liquid treatment cartridge, the vessel-forming part comprises a flange, joined to the capping part and at least partly comprised in the rim.

This provides for a relatively large contact area between the capping part and the vessel-shaped part that is available for forming a joint. The flange and the capping part can be pressed together in the joining process, allowing for the provision of an adhesive joint or a joint obtainable through welding, e.g. ultrasonic welding. The at least one inlet for gas may be provided in an axially-facing surface of the flange.

In an example of this embodiment, at least a section of at least one of the at least one venting channels is formed between the flange and the capping part.

This avoids complicated moulding and de-moulding operations or complicated additive manufacturing operations using support structures to form the venting channels. Grooves or recesses can instead be formed in one of both of the flange and capping part surfaces that are subsequently placed in contact with each other to form at least a section of at least one of the at least one venting channels.

In an embodiment, the rim comprises at least one of:
at least one notch in a laterally outer edge of the rim; and
at least one of a recess and an opening in a surface of the rim facing in axial direction away from the capping part.

The notch, recess or opening are each suitable for receiving protruding orienting parts of a cartridge seat to limit the number of orientations with which the liquid treatment cartridge can be received in the cartridge-receiving chamber. This can be useful for aligning the at least one outlet for gas with venting passages through the walls of the cartridge-receiving chamber or for positioning the liquid-pervious parts of the housing of the liquid treatment cartridge, for example.

In an embodiment, the surface of engagement is comprised in a surface of the rim facing in an axial direction, e.g. facing away from the housing.

In this embodiment, it is relatively easy to prevent inadequate sealing due to skew of the liquid treatment cartridge.

In an example of this embodiment, the surface of engagement is flat.

The surface of engagement may also be uninterrupted. Compared with the alternative of a slightly conical surface that still faces mainly in the axial direction, this embodiment is relatively insensitive to slight misplacements of the liquid treatment cartridge in lateral direction.

In an example of any embodiment in which the surface of engagement is comprised in a surface of the rim facing in an axial direction, e.g. facing away from the housing, the rim has a surface, e.g. a flat surface, facing in an opposite axial direction to the surface comprising the surface of engagement.

The rim can thus be clamped axially between a further part of the liquid treatment system and the one co-operating with the surface of engagement to prevent liquid flow through the mouth of the cartridge-receiving chamber around the liquid treatment cartridge. This allows for the provision of an axial seal without the need to support the cartridge at the opposite axial end to the axial end at which the capping part is provided. The liquid treatment cartridge can even be suspended in the cartridge-receiving chamber, if required.

In an embodiment of the liquid treatment cartridge, the surface of engagement is comprised in a surface of the rim closed on itself around the axis and facing predominantly radially outwards.

This is also a configuration in which the liquid treatment cartridge does not require axial support at the axial end opposite the axial end at which the capping part is provided for there to be an effective seal.

In an example of this embodiment, the surface comprising the surface of engagement is angled with respect to the axis, such that an axial edge of the surface proximal to the axial end of the housing opposite the axial end of the housing at which the capping part is provided is closer to the axis than an opposite axial edge of the surface.

This allows the liquid treatment cartridge also to be supported axially at the rim. Also, the liquid treatment cartridge can be guided laterally during insertion.

In an embodiment of the liquid treatment cartridge the housing comprises at least one protruding part for engaging a wall of the cartridge-receiving chamber, e.g. for insertion into at least one of an aperture and a passage through the wall of the cartridge-receiving chamber.

The at least one protruding part can fulfil at least an alignment or orienting function without requiring contact between the housing of the liquid treatment cartridge and the wall of the cartridge-receiving chamber over a relatively large area. Where the cartridge housing is rigid, i.e. has an essentially invariable shape, this embodiment helps prevent skew. Where the walls of the housing are formed at least in sections by at least one sheet comprising at least one membrane, the axial end opposite the axial end at which the capping part is provided is positioned laterally. This can help prevent contact between the lateral wall of the cartridge housing and the side wall of the cartridge-receiving chamber. Further functions can be fulfilled by the protruding part or parts, as will be explained.

In an example of this embodiment, the at least one protruding part comprises a protruding part protruding in an axial direction.

The lateral positioning effect described above is thus achievable with only one protruding part, as opposed to multiple laterally protruding parts. Where the protruding part or parts is or are for insertion into at least one of an aperture and a passage through the wall of the cartridge-receiving chamber, complicated acts to position the cartridge in the cartridge-receiving chamber are avoided. An axial movement of the entire housing of the liquid treatment cartridge suffices.

In an example of any embodiment in which the housing comprises at least one protruding part for engaging a wall of the cartridge-receiving chamber, e.g. for insertion into at least one of an aperture and a passage through the wall of the cartridge-receiving chamber, the protruding part is a hollow protruding part.

The protruding part does not therefore need to be very small for the amount of material needed to form the protruding part to be kept relatively low. Furthermore, the interior of the hollow protruding part can be used to guide fluid.

In a particular example of this embodiment, an interior of the hollow protruding part is open at an axial end of the hollow protruding part distal to a remainder of the housing.

This makes the hollow protruding part relatively easy to produce by moulding or additive manufacturing.

In a particular example of this embodiment, at least one outlet of at least one of the at least one venting channels opens into the interior of the hollow protruding part, or the axial end of the hollow protruding part distal to a remainder of the housing corresponds to a respective one of the at least one outlets of at least one of the at least one venting channels.

In either case, the hollow protruding part interacts with the wall of the cartridge receiving chamber, more particularly an aperture through the wall or an aperture at one end of a passage through the wall, to guide the gases to be vented out of the cartridge-receiving chamber.

In an example of any embodiment in which the housing comprises at least one protruding part for engaging a wall of the cartridge-receiving chamber, e.g. for insertion into at least one of an aperture and a passage through the wall of the cartridge-receiving chamber, wherein the protruding part is a hollow protruding part, an interior of the hollow protruding part is closed to the housing interior.

Thus, liquid cannot flow into the hollow interior of the protruding part.

An embodiment of the liquid treatment cartridge comprises at least one liquid treatment medium arranged in the housing interior, e.g. a liquid treatment medium for the treatment of liquid in a diffusive process.

In this embodiment, efficient use is made of the available volume of the cartridge housing. For present purposes, diffusive processes include solution of liquid treatment medium, e.g. of minerals, absorption and ion exchange. In diffusive processes, the contact time is determinative of the level of treatment. This means that the rate of flow through the liquid treatment cartridge should preferably be consistent. Adequate venting helps to ensure that this is the case.

An embodiment of the liquid treatment cartridge comprises a bed of at least one granular material in the housing interior.

Pores are formed between the granules. The bed can thus form a depth filter. Furthermore, where the granules comprise material for the treatment of liquid in a diffusive process, there is a relatively large contact area. If the one or more materials have a lower density than water, then they will form a relatively loosely packed bed when used to treat aqueous liquids such as mains drinking water.

In an example of this embodiment, the capping part is provided with a screen bulging inwards into the housing interior.

This helps vent the housing interior. The liquid enters the housing interior in the centre of the bulge and gas leaves at the outer edge. The screen may be a section of a capping part made in one piece, or the capping part may be provided with a mesh forming the screen that is fixed to the capping part.

In an embodiment, the capping part comprises a self-supporting part, e.g. a part made in one piece. The capping part may be a single self-supporting part made in one piece.

According to another aspect, the liquid treatment system according to the invention comprises:
a replaceable liquid treatment cartridge according to the invention; and
a reservoir part comprising a reservoir for receiving liquid to be treated and a cartridge-receiving chamber, the cartridge-receiving chamber having a mouth proximal to the reservoir and at least one chamber outlet allowing liquid to flow out of the cartridge-receiving chamber,
wherein the reservoir part comprises a cartridge seat comprising at least one part for engaging the rim of the liquid treatment cartridge along the surface of engagement to prevent a flow of liquid from the reservoir through the mouth of the cartridge-receiving chamber past the housing of the liquid treatment cartridge.

In an embodiment, in which the liquid treatment cartridge is a liquid treatment cartridge in any embodiment in which the housing comprises at least one protruding part for engaging a wall of the cartridge-receiving chamber, e.g. for insertion into at least one of an aperture and a passage through the wall of the cartridge-receiving chamber, a wall of the cartridge-receiving chamber comprises at least one of an aperture and a passage through the wall into which a respective one of the at least one protruding parts of the housing of the liquid treatment cartridge is insertable.

The liquid treatment cartridge is thus at least positioned relatively accurately without the need for contact between the reservoir part and the housing of the liquid treatment cartridge over a major part of the exterior surface of the liquid treatment cartridge. Where the protruding part conducts the vented gases, they emerge from the protruding part outside the cartridge-receiving chamber and away from the treated liquid.

In an example of this embodiment, the liquid treatment cartridge is a liquid treatment cartridge in any embodiment in which the at least one protruding part comprises a protruding part protruding in an axial direction, wherein an end wall of the cartridge-receiving chamber distal to the mouth comprises an aperture for receiving the protruding part protruding in the axial direction.

It thus suffices to insert the liquid treatment cartridge in axial direction for the protruding part to pass through the aperture. Where the protruding part conducts the vented gases, they emerge from the protruding part outside the cartridge-receiving chamber. An end wall with an aperture is easy to produce and to keep clean.

In a particular example of this embodiment, the protruding part protruding in the axial direction is configured to engage an edge defining the aperture along at least one section of a circumference of the protruding part, and at least one of the at least one chamber outlets is defined between a further section of the circumference of the protruding part and the edge defining the aperture.

There is thus a residual opening between the aperture and the inserted protruding part. This residual opening has a defined area that can be used to set the rate of flow. It is possible to provide a range of reservoir parts for use with the same liquid treatment cartridge housing configuration, but with residual openings having different areas appropriate to different respective applications.

In an example of any embodiment in which the liquid treatment cartridge is a liquid treatment cartridge in any embodiment in which the housing comprises at least one protruding part for engaging a wall of the cartridge-receiving chamber, e.g. for insertion into at least one of an aperture and a passage through the wall of the cartridge-receiving chamber, wherein a wall of the cartridge-receiving chamber comprises at least one of an aperture and a passage through the wall into which a respective one of the at least one protruding parts of the housing of the liquid treatment cartridge is insertable, at least one venting passage is formed in at least one wall of the cartridge-receiving chamber, the at least one venting passage has at least one inlet for gas and at least one outlet for gas, the outlet for gas is open to an exterior of the reservoir part, and the liquid treatment cartridge is placeable in the cartridge seat with the at least one outlets for gas of the at least one venting channels aligned with a respective inlet for gas of one of the at least one venting passages.

The protruding part can be relatively short and the wall of the cartridge-receiving chamber relatively thick in this embodiment.

An embodiment of the liquid treatment system comprises a plurality of ribs formed on an interior surface laterally bounding the cartridge-receiving chamber, wherein each rib has a surface at a longitudinal end of the rib proximal to the mouth for supporting the rim of the liquid treatment cartridge in an axial direction.

It is thus possible to provide axial support at the level of the rim whilst still providing access to the at least one inlets for gas.

In an example of any embodiment in which the liquid treatment cartridge is a liquid treatment cartridge in any embodiment in which the housing comprises at least one protruding part for engaging a wall of the cartridge-receiving chamber, e.g. for insertion into at least one of an aperture and a passage through the wall of the cartridge-receiving chamber, wherein a wall of the cartridge-receiving chamber comprises at least one of an aperture and a passage through the wall into which a respective one of the at least one protruding parts of the housing of the liquid treatment cartridge is insertable, at least one venting passage is formed in at least one wall of the cartridge-receiving chamber, the at least one venting passage has at least one inlet for gas and at least one outlet for gas, the outlet for gas is open to an exterior of the reservoir part, and the liquid treatment cartridge is placeable in the cartridge seat with the at least one outlets for gas of the at least one venting channels aligned with a respective inlet for gas of one of the at least one venting passages, at least one of the at least one venting passages extends through a respective one of the ribs, wherein the inlet for gas of that venting passage is provided in the surface at the longitudinal end of that rib.

The rib thus fulfils both a support function and the function of leading vented gases out of the cartridge-receiving chamber. The ribs allow the gas to be conducted to a position at a relatively large axial distance to the mouth of the cartridge-receiving chamber without having to provide the cartridge-receiving chamber with a completely double lateral wall.

In an example of any embodiment of the liquid treatment system in which the liquid treatment system comprises a plurality of ribs formed on an interior surface laterally bounding the cartridge-receiving chamber, wherein each rib has a surface at a longitudinal end of the rib proximal to the mouth for supporting the rim of the liquid treatment cartridge in an axial direction, at least one of the plurality of ribs is provided with an orienting part at the longitudinal end of that rib proximal to the mouth, the orienting part being configured to co-operate with a co-operating orienting part of the liquid treatment cartridge, such that a shape-lock is formed between the co-operating orienting parts when the liquid treatment cartridge is placed in the cartridge seat.

The orienting part may be a protruding part protruding with respect to the surface for supporting the rim of the liquid treatment cartridge in an axial direction. This protruding part may be cylindrical, although not necessarily circle-cylindrical in shape. In this embodiment, it is possible to limit the number of rotary positions in which the liquid treatment cartridge can be placed correctly in the cartridge-receiving chamber. It is thus possible, for example, to align the outlets for gas of the liquid treatment cartridge more easily or more accurately with inlets of venting passages or with apertures through a wall of the cartridge-receiving chamber.

In an embodiment of the liquid treatment system, the reservoir part comprises a beaker-shaped part comprising at least an end section of the cartridge-receiving chamber distal from the reservoir and a main part comprising the reservoir and any remaining section of the cartridge-receiving chamber, wherein the beaker-shaped part and the main part are releasably attached to each other.

In this embodiment, it is possible to detach the beaker-shaped part from the main part in order to mount the liquid treatment cartridge. The liquid treatment cartridge can be placed in the beaker-shaped part and moved into position by attaching the beaker-shaped part to the main part of the reservoir part. The releasable attachment may be by means of a threaded joint or a bayonet joint.

In an example of this embodiment, the liquid treatment cartridge is a liquid treatment cartridge in any embodiment in which the surface of engagement is comprised in a surface of the rim facing in an axial direction, e.g. facing away from the housing, wherein the rim has a surface, e.g. a flat surface, facing in an opposite axial direction to the surface comprising the surface of engagement, the main part comprises a sealing part for engaging the surface of engagement of the rim of the liquid treatment cartridge, and the beaker-shaped part comprises at least one support part for engaging the surface of the rim facing in an opposite axial direction to the surface comprising the surface of engagement.

In this embodiment, the mere act of attaching the beaker-shaped part to the main part also clamps the rim between the support part comprised in the beaker-shaped part and the sealing part comprised in the main part of the reservoir part. The user need only drop the liquid treatment cartridge into the beaker-shaped part and attach the beaker-shaped part to the main part of the reservoir part.

The invention will be explained in further detail with reference to the accompanying drawings, in which:

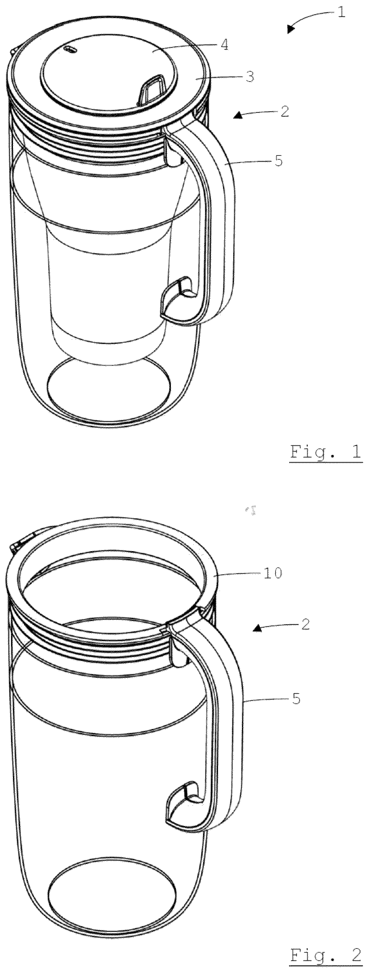

- Fig. 1: is a perspective view of a liquid treatment system;
- Fig. 2: is a perspective view of a jug comprised in the liquid treatment system, with a lid removed;
- Fig. 3: is a perspective view from below of a first funnel for use in the liquid treatment system;
- Fig. 4: is a cross-sectional view of the first funnel;
- Fig. 5: is a cross-sectional view of a first liquid treatment cartridge as the first liquid treatment cartridge is being inserted into the first funnel;
- Fig. 6: is a cross-sectional view of the first liquid treatment cartridge in place in a cartridge seat defined by the first funnel;
- Fig. 7: is a cross-sectional view of the first liquid treatment cartridge;
- Fig. 8: is a cross-sectional view of an inlet section of a venting channel defined in the first liquid treatment cartridge;
- Fig. 9: is a cross-sectional view of an outlet section of the venting channel defined in the first liquid treatment cartridge;
- Fig. 10: is a perspective view of an assembly of a support structure and a bottom frame comprised in the first liquid treatment cartridge;
- Fig. 11: is a perspective view from above of a top part of the support structure of Fig. 10;
- Fig. 12: is a perspective view from below of the support structure of Figs. 10 and 11;
- Fig. 13: is a perspective view from above of a capping part of the first liquid treatment cartridge;
- Fig. 14: is a perspective view from below of the capping part of Fig. 13;
- Fig. 15: is a cross-sectional view of a second funnel for use in the liquid treatment system of Fig. 1 with the first liquid treatment cartridge;
- Fig. 16: is a detailed cross-sectional view of the first liquid treatment cartridge in place in a cartridge seat defined by the second funnel;

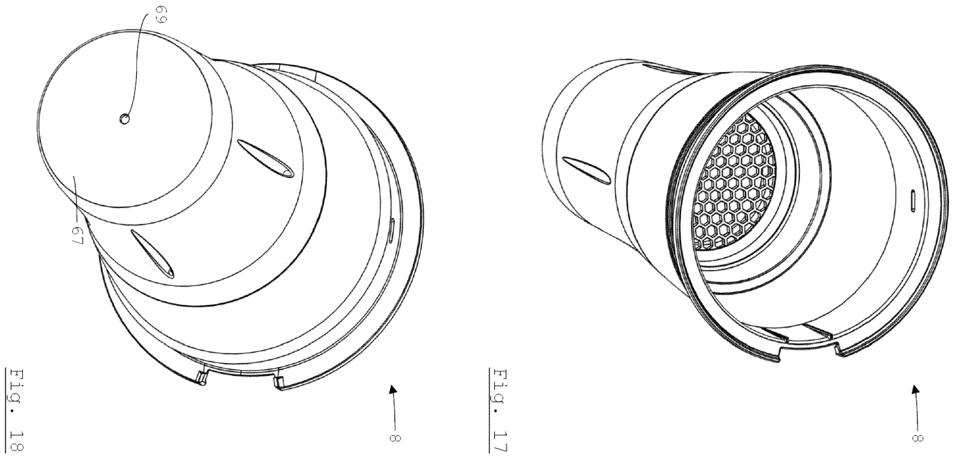

- Fig. 17: is a perspective view from above of a third funnel and second liquid treatment cartridge for use in the liquid treatment system;
- Fig. 18: is a perspective view from below of the third funnel;
- Fig. 19: is a cross-sectional view of the third funnel without the second liquid treatment cartridge;
- Fig. 20: is a detailed view of a cartridge seat defined in the third funnel;
- Fig. 21: is a cross-sectional view of the second liquid treatment cartridge in place in the seat defined in the third funnel;
- Fig. 22: is a detailed cross-sectional view of the second liquid treatment cartridge and the cartridge seat shown in Fig. 21;
- Fig. 23: is a perspective view from above of the second liquid treatment cartridge;
- Fig. 24: is a perspective view from below of the second liquid treatment cartridge;
- Fig. 25: is a perspective view of a top support part comprised in the second liquid treatment cartridge;
- Fig. 26: is a detailed side view of a sealing rim comprised in the second liquid treatment cartridge;
- Fig. 27: is a perspective view from below of a capping part comprised in the second liquid treatment cartridge;
- Fig. 28: is a perspective view from above of a base part comprised in the second liquid treatment cartridge;
- Fig. 29: is a cross-sectional view of the jug of Fig. 2 fitted with a fourth funnel and a third liquid treatment cartridge;
- Fig. 30: is a detailed cross-sectional view of a cartridge seat provided by the fourth funnel for the third liquid treatment cartridge;
- Fig. 31: is a cross-sectional perspective view of the fourth funnel;
- Fig. 32: is a perspective view of the third liquid treatment cartridge;
- Fig. 33: is a perspective view from below of the third liquid treatment cartridge;
- Fig. 34: is a detailed cross-sectional view of an upper part of the third liquid treatment cartridge;
- Fig. 35: is a perspective view of a main capping part comprised in a housing of the third liquid treatment cartridge;
- Fig. 36: is a perspective view from below of the main capping part of Fig. 35;
- Fig. 37: is a perspective view of a support part and a cover part comprised in the housing of the third liquid treatment cartridge;
- Fig. 38: is a perspective view of an assembly of the support part and cover part of Fig. 37 and a mesh comprised in the housing of the third liquid treatment cartridge;
- Fig. 39: is a perspective view from below of the support part of Figs. 37 and 38;
- Fig. 40: is a cross-sectional view of the assembly of the support part and cover part of Figs. 37-39;
- Fig. 41: is a plan cross-sectional view of an upper section of a variant of the third liquid treatment cartridge comprising an alternative support part and capping part;
- Fig. 42: is a perspective cross-sectional view of the upper section of the variant of the third liquid treatment cartridge;
- Fig. 43: is a perspective view from above of the capping part shown in Figs. 41 and 42;
- Fig. 44: is a perspective view from below of the capping part of Figs. 41-43; and
- Fig. 45: is a perspective view of the support part of Figs. 41 and 42.

A liquid treatment system 1 comprises a jug 2 or similar pouring vessel (e.g. a carafe) or dispensing vessel (e.g. a vessel provided with a tap). The jug 2 is provided with a lid 3 in which a fill opening (not shown) is provided, which is closed by a closure element 4, in the example a hinged closure element 4 arranged to pivot upwards and towards a handle 5 of the jug 2. The jug 2 is mainly made of transparent material, e.g. glass or polymer material. The jug 2 comprises a reservoir for receiving treated liquid.

Any one of four funnels 6-9 to be described in the following may be comprised in the liquid treatment system 1. The jug 2 is provided with a generally ring-shaped jug part 10 at a mouth of the jug 2. The ring-shaped jug part 10 supports whichever one of the funnels 6-9 is used so as to suspend the funnel 6-9 in an interior of the jug 2. Disregarding the handle 5, the jug 2 has a circular cross-section at a level below a pouring spout of the jug 2 in the illustrated embodiment. In alternative embodiments, the cross-section may be elongated (e.g. elliptical) to provide an increased volume whilst still allowing for placement on a shelf in a door of a household refrigerator.

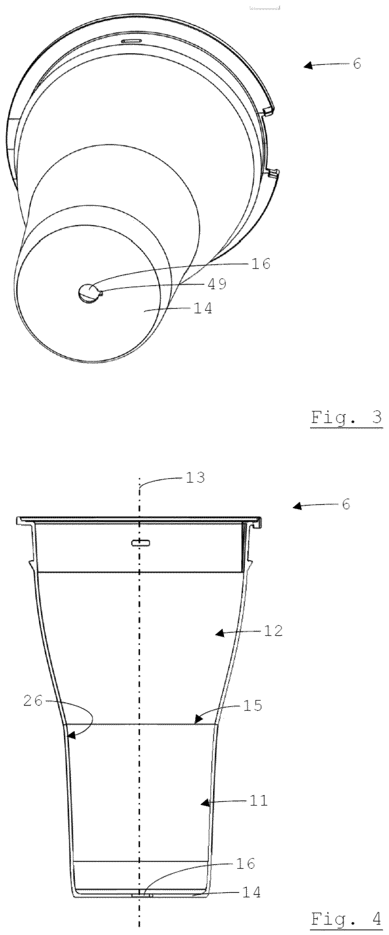

A first funnel 6 (Figs. 3-6) is made in one piece and comprises a section defining a cartridge-receiving chamber 11 and a section defining a reservoir 12 for liquid to be treated. It is convenient to define a reference axis 13. The reservoir 12 extends to one axial end of the funnel 6. The cartridge-receiving chamber 11 is located at an opposite axial end of the funnel 6.

An interior of the cartridge-receiving chamber 11 is bounded at one axial end by an axial end wall 14. The cartridge-receiving chamber 11 has a mouth 15 at an opposite axial end at a transition between the cartridge-receiving chamber 11 and the reservoir 12. An outlet opening 16 through the axial end wall 14 allows liquid to flow out of the cartridge-receiving-chamber 11.

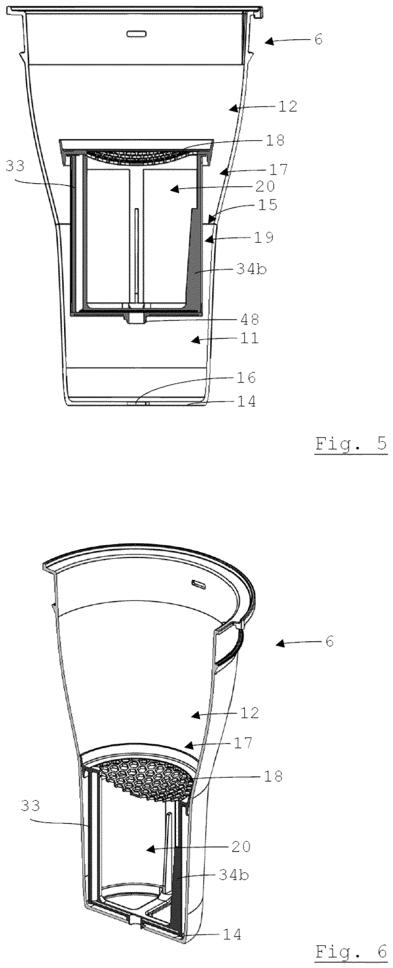

A first liquid treatment cartridge 17 (Fig. 5-14) comprises a housing comprising a capping part 18 and a vessel-forming part 19, joined to each other to enclose a housing interior 20. The capping part 18 is made in one piece. The vessel-forming part 19 is a multi-component part.

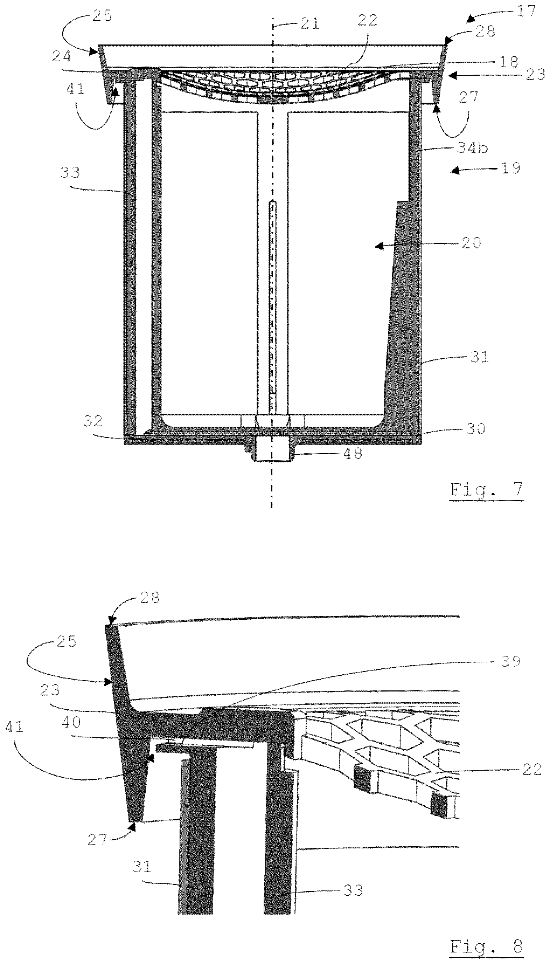

It is convenient to define a cartridge axis 21 (Fig. 7) as a reference axis. The cartridge axis 21 extends from an axial end of the housing at which the capping part 18 is provided to an opposite axial end of the housing.

The capping part 18 may be a moulded part or a part obtainable by additive manufacturing, for example. The capping part 18 is self-supporting. The capping part 18 has a fixed shape to which the capping part 18 returns when elastically deformed. That is to say that the capping part 18 is non-deformable.

The capping part 18 comprises a central part forming a screen 22 bulging inwards into the housing interior 20. The apertures in the screen 22 each form a liquid inlet for entry of liquid into the housing interior 20. A radially outer part of the capping part 18 surrounding the screen 22 is partly comprised in a sealing rim 23 of the housing. This radially outer part comprises a flat annular section 24 and an adjoining section presenting a surface 25 of engagement (Fig. 8) for engaging a sealing surface 26 (Fig. 4) corresponding to a section of an interior surface of a side wall of the funnel 6.

The sealing surface 26 is closed on itself around the reference axis 13. In the illustrated embodiment, the sealing surface 26 faces predominantly radially inwards. However, the sealing surface 26 tapers slightly inwards, seen in axial direction towards the axial end at which the cartridge-receiving chamber 11 is provided.

The surface 25 of engagement is closed on itself around the cartridge axis 21. Seen in axial direction, the sealing surface 26 encloses the capping part 18 an entire exterior surface of the capping part 18 is exposed to untreated liquid, in use.

The surface 25 of engagement faces predominantly radially outwards, but also tapers slightly, such that an axial edge 27 proximal to an axial end of the housing opposite an axial end at which the capping part 18 is provided is closer to the cartridge axis 21 than an opposite axial edge 28. In effect, the surface 25 of engagement is conical, as is the co-operating sealing surface 26. The taper angle (to the cartridge axis 21 and the reference axis 13) may differ slightly. If that of the sealing surface 26 is slightly larger so that the degree of tapering is stronger, the part of the sealing rim 23 presenting the surface 25 of engagement will be elastically deformed slightly when the first cartridge 17 is pushed into place.

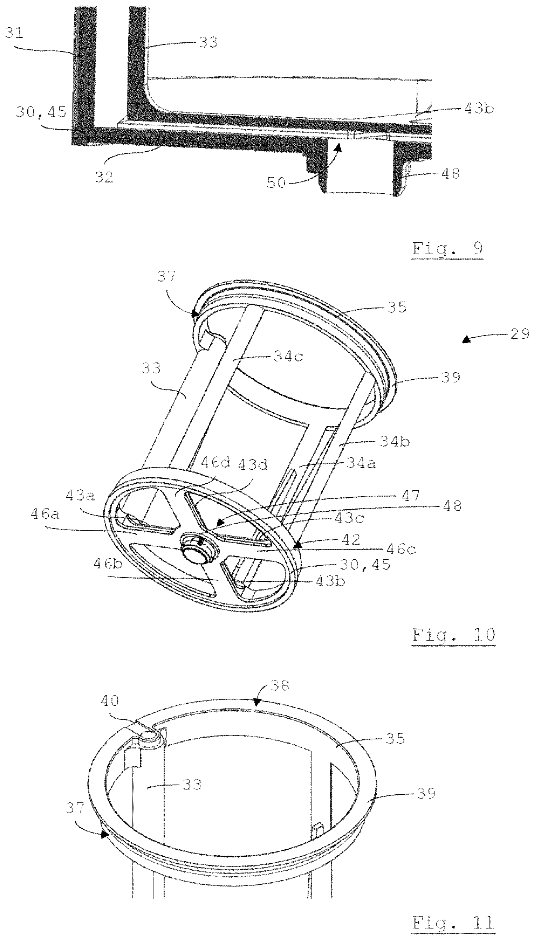

The vessel-forming part 19 comprises a support structure 29 (Fig. 10-12), a base cover part 30, a first sheet 31 comprising at least one membrane and a second sheet 32 comprising at least one membrane.

The first and second sheets 31,32 are both liquid-pervious. The first and second sheets 31,32 consist of one or more porous membranes. These membranes may be made of nylon, for example. In an embodiment, the membranes are microfiltration membranes. As an example, the first and second sheets 31,32 may have a micron rating in the range of 0.1 - 5, implying that 99.9% of particles at or bigger than the micron rating will be stopped by the first and second sheets 31,32. In an embodiment, the first and second sheets 31,32 have a thickness in the range of 0.1 -0.5 mm, e.g. in the range of 0.1 - 0.3 mm. Mean flow pore (ASTM F316) can be in the range of 0.2 - 0.7, for example.

The first sheet 31 forms a lateral circumferential wall of the housing over a majority of the surface area of the lateral circumferential wall. Where this is the case, the housing interior 20 is only separated from an environment of the first cartridge 17 by the first sheet 31. The first sheet 31 is mounted to the support structure 29 along an axial edge of the first sheet 31 proximal to the capping part 18 and along an axial edge of the first sheet 31 distal to the capping part 18. The first sheet 31 is otherwise closed on itself around the cartridge axis 21.

The second sheet 32 forms a majority of a bottom wall of the housing. The second sheet 32 is mounted to the base cover part 30 along a circumferential edge of the second sheet 32. The base cover part 30 is fixed to the support structure 29. The base cover part 30 and the axial end of the support structure 29 to which the base cover part 30 is fixed are provided with overlapping openings through the base cover part 30 and the support structure 29, respectively, which are covered by the second sheet 32. Thus, further outlets allowing liquid to flow out of the housing interior 20 are formed, in addition to the outlet formed by the liquid-pervious lateral circumferential wall.

The housing interior 20 is filled with at least one liquid treatment medium (not shown), e.g. a liquid treatment for the treatment of liquid in a diffusive process. For present purposes this includes ion exchange, sorption and the entry into solution of minerals. The liquid treatment medium may be provided in the form of a bed of at least one granular material. If the first and second sheets 31,32 comprise one or more microfiltration membranes, the particles in the bed can be relatively fine. This allows the particles in the bed to be relatively fine without risk of contamination of the treated liquid. The material may in particular comprise ion exchange resin, e.g. weakly acidic cation exchange resin. In that case, a majority of the weakly acidic cation exchange resin will be in the hydrogen form prior to use. A minority may be in the potassium or sodium form for buffering purposes. The bed may additionally or alternatively comprise one or more sorbents, e.g. activated carbon or compounds for adsorbing heavy metals.

The support structure 29 of this example comprises a first strut 33 and three second struts 34a-c extending in axial direction over a majority of the axial extent of the housing of the first cartridge 17. The support structure 29 further comprises a first support part rim 35 at one axial end and an integral base part comprising a second support part rim 36 at an opposite axial end. The first support part rim 35 is closed on itself around the cartridge axis 21. The second support part rim 36 is closed on itself around the cartridge axis 21. The first strut 33 and the second struts 34a-c interconnect the first and second support part rims 35,36. In the illustrated embodiment, the first strut 33 and the second struts 34a-c are distributed at regular intervals of 90° along the first and second support part rims 35,36.

The first strut 33 has a hollow interior forming a section of a venting channel. The second struts 34a-c are solid. Variants with a different number of first struts 33 or different number of second struts 34a-c, including variants with only first struts 33, are possible.

The support structure 29 illustrated is made in one piece. The support structure 29 is also self-supporting. The support structure 29 can be elastically deformed, but returns to its original shape. This shape also determines the axial dimension of the first cartridge 17, which is invariable. The support structure 29 may be a moulded part or a part obtainable by additive manufacturing, for example.

The first support part rim 35 (Fig. 11) comprises a radially outward-facing surface 37 to which the first sheet 31 is joined along an axial edge of the first sheet 31. The joint may be adhesive or obtainable by welding, e.g. ultrasonic welding. The first support part rim 35 also comprises an axially outward-facing surface 38, defined by a flange 39, which is also a flange 39 of the vessel-forming part 19. The axially outward-facing surface 38 is flat with the exception of a recess 40 extending between an outer edge of the axially outward-facing surface 38, thus of the flange 39, and an inlet of the hollow interior of each, in this example the only, first strut 33. The first support part rim 35 is joined to the capping part 18 at the axially outward-facing surface 38. The joint is a permanent joint. The joint may be an adhesive joint or obtainable by welding, e.g. ultrasonic welding, for example. Thus, the flange 39 and a radially outer section of the capping part 18 form the sealing rim 23 of the first cartridge 17.

Due to the recess 40, a further section of the venting channel is formed between the capping part 18 and the support structure 29. This section extends to an inlet 41 for gas formed on the same side of the capping part 18, seen in axial direction, as the vessel-forming part 19. Thus, the inlet 41 for gas is accessible to any air accumulating in the cartridge-receiving chamber 11 in the space left around the first cartridge 17.

Because the inlet 41 for gas is provided in the sealing rim 23, the inlet 41 for gas is at the axial end proximal to the reservoir 12 of the space left in the cartridge-receiving chamber 11 by the first cartridge 17. Effective venting is assured, because liquid filling the space will drive the gas into the venting channel.

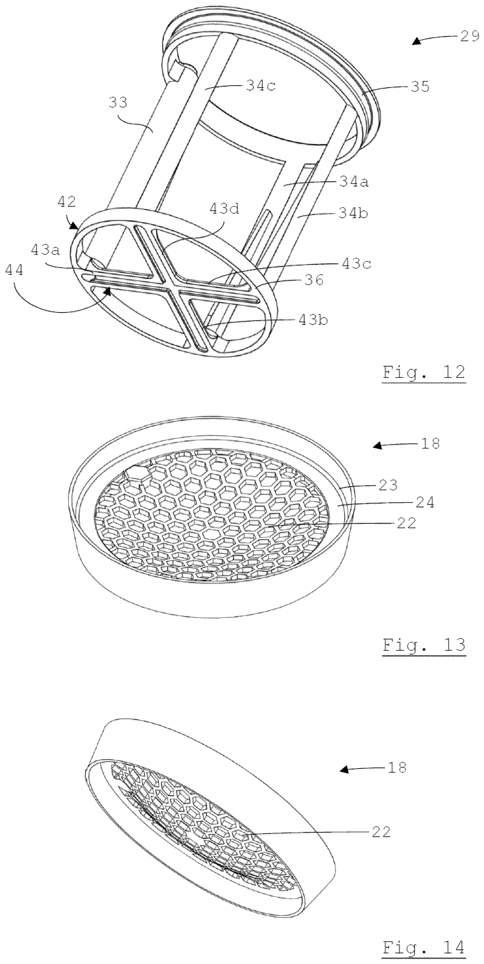

The second support part rim 36 (Figs. 10, 12) comprises a radially outward-facing surface 42 to which the first sheet 31 is joined along an axial edge of the first sheet 31. The joint may be adhesive or obtainable by welding, e.g. ultrasonic welding.

The base part comprising the second support part rim 36 further comprises spoke parts 43a-d meeting at a central part 47 of the base part. An axially outward-facing surface 44 of the support structure 29 is flat, but for grooves formed in the spoke parts 43a-d. The base cover part 30 is joined to the support structure 29 at the axially outward-facing surface 44 of the support structure 29. The joint is a permanent joint in this example. The joint may be an adhesive joint or a joint obtainable by welding, e.g. ultrasonic welding.

The base cover part 30 comprises a base cover part rim 45 and spoke cover parts 46a-c corresponding in shape to the second support part rim 36 and the spoke parts 43a-d, respectively. The spoke parts 43a-d and the spoke cover parts 46a-d together form spokes having a hollow interior, due to the grooves in the spoke parts 43a-d. The hollow interior of one of the spokes connects to the hollow interior of the first strut 33 and thus forms a further section of the venting channel.

A central part 47 of the base part formed by the axial end of the support structure 29 and the base cover part 30 comprises a protruding part 48. Here, the protruding part 48 is an integral part of the base cover part 30. The protruding part 48 could alternatively be an integral part of the support structure 29 and extend through an aperture in the base cover part 30.

The protruding part 48 protrudes in an axial direction.

At least the protruding part 48 is self-supporting. Here, the base cover part 30 is entirely self-supporting, but it suffices if the second support part rim 36 and the spoke parts 43a-d are self-supporting, since the spoke parts 43a-d reinforce the spoke cover parts 46a-d. The protruding part 48 is shaped to conform to an outer edge of the outlet opening 16 of the cartridge-receiving chamber 11 along a majority of a circumference of the protruding part 48. This edge is interrupted to define a residual outlet opening 49 between the edge of the outlet opening 16 and a further section of the circumference of the protruding part 48. In a variant, there may be several such residual outlet openings 49. The area of the residual outlet opening 49 determines the rate of flow of liquid through the liquid treatment system 1.

Because the protruding part 48 is insertable into the outlet opening 16 to engage an edge of the outlet opening 16, the protruding part 48 contributes to aligning the cartridge axis 21 with the reference axis 13. This helps prevent skew and improves the seal provided by the sealing rim 23.

An interior of the of the protruding part 48 is hollow and open at a free axial end, being the axial end distal to a remainder of the housing of the first cartridge 17. This hollow interior is separated from the housing interior 20 by a central part of the axial end of the support structure 29. Thus, liquid cannot enter the hollow interior of the protruding part 48, at least not without first passing through the outlet for liquid, in this case through the second sheet 32. On the other hand, the venting channel terminates at an outlet 50 for gas (Fig. 9) open to the interior of the protruding part 48.

It follows then that the outlet 50 for gas is spatially separated from the part of the exterior surface of the housing of the first cartridge 17 that is enclosed by the surface of engagement 25. Furthermore, the protruding part 48 prevents liquid from entering the venting channel through the outlet 50 for gas. Gas is vented through the outlet 50 for gas to the atmosphere above the treated liquid collected in the jug 2 or other collecting vessel in which the first funnel 6 is suspended.

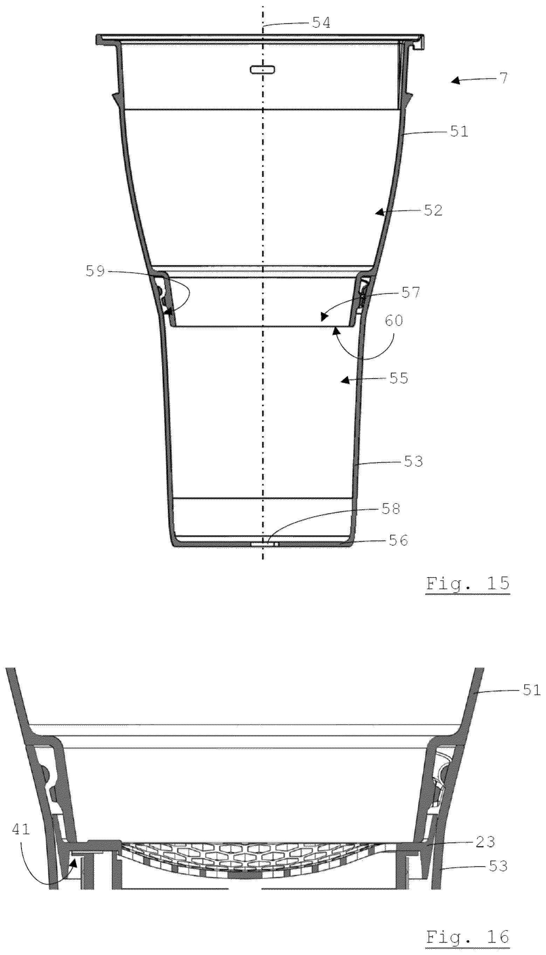

The second funnel 7 (Figs. 15, 16) is quite similar to the first funnel 6 and equally suitable for use with the first cartridge 17. The second funnel 7 differs primarily from the first funnel 6 in that the second funnel 7 comprises an assembly of components and is configured to exert a sealing force that is relatively well-defined.

Specifically, the second funnel 7 comprises a main part 51 comprising a reservoir 52. The second funnel 7 also comprises a beaker-shaped part 53.

It is again convenient to define a reference axis 54 for the second funnel 7. The main part 51 extends from one axial end to an axial end of reduced lateral dimensions at which the beaker-shaped part 53 is releasably attached to the main part 51. In the illustrated example, a threaded connection is provided.

A bayonet connection or the like could be used instead. A sealing element may provide for a liquid-tight connection, if required.

The beaker-shaped part 53 comprises a cartridge-receiving chamber 55. An interior of the cartridge-receiving chamber 55 is bounded at one axial end by an axial end wall 56. The cartridge-receiving chamber 55 has a mouth 57 at an opposite axial end. An outlet opening 58 through the axial end wall 56 allows liquid to flow out of the cartridge-receiving-chamber 55. The outlet opening 58 is shaped like the outlet opening 16 of the first funnel 6.

A sealing surface 59 corresponds to a section of an interior surface of a side wall of the beaker-shaped part 53 of the second funnel 7.

The sealing surface 59 is closed on itself around the reference axis 54. In the illustrated embodiment, the sealing surface 59 faces predominantly radially inwards. However, the sealing surface 59 tapers slightly inwards, seen in axial direction towards the axial end at which the cartridge-receiving chamber 55 is provided. The sealing surface 59 is arranged to co-operate with the surface of engagement 25 of the first cartridge 17.

A lower axial edge 60 of the main part 51 is configured to engage the capping part 18 to exert an axial force directed into the cartridge-receiving chamber 55. This presses the first cartridge 17 firmly into the cartridge seat comprised in the second funnel 7.

In use, a user first places the first cartridge 17 in the beaker-shaped part 53 such that the surface of engagement 25 engages the sealing surface 59 and the protruding part 48 engages the outlet opening 58. Then, the beaker-shaped part 53 is attached to the main part 51 thereby pressing the first cartridge 17 more firmly into place. There may be a stop (not shown) defining an end point of the co-operating parts that releasably attach the beaker-shaped part 53 to the main part 51. Venting of the cartridge-receiving chamber 55 is effected in the same way as in the first funnel 6.

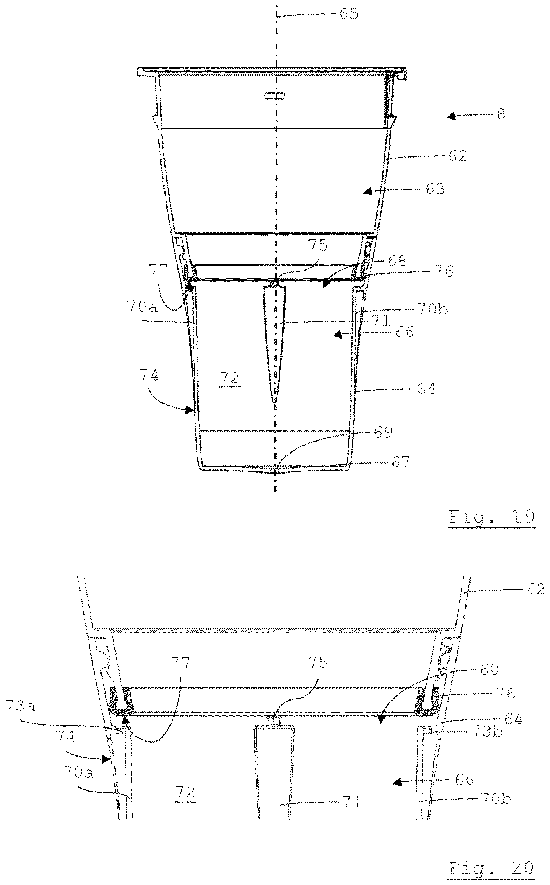

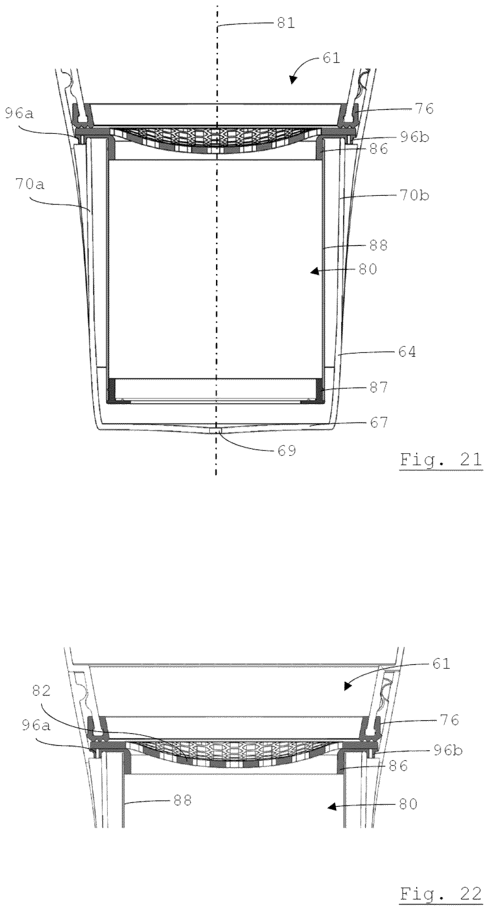

The third funnel 8 (Figs. 19-22) is configured for use with a second replaceable liquid treatment cartridge 61 (Figs. 21-28). The third funnel 8 comprises a main part 62 comprising a reservoir 63. The third funnel 8 also comprises a beaker-shaped part 64.

It is again convenient to define a reference axis 65 (Fig. 19) for the third funnel 8. The main part 62 extends from one axial end to an axial end of reduced lateral dimensions at which the beaker-shaped part 64 is releasably attached to the main part 62. In the illustrated example, a threaded connection is provided. A bayonet connection or the like could be used instead. A sealing element may provide for a liquid-tight connection, if required.

The beaker-shaped part 64 comprises a cartridge-receiving chamber 66. An interior of the cartridge-receiving chamber 66 is bounded at one axial end by an axial end wall 67. The cartridge-receiving chamber 66 has a mouth 68 at an opposite axial end. An outlet opening 69 through the axial end wall 67 allows liquid to flow out of the cartridge-receiving-chamber 66. The outlet opening 69 is in this case a round opening, because the second cartridge 61, in use, is suspended above the axial end wall 67.

A plurality of first ribs 70a,b, in this case two, and a plurality of second ribs 71, in this case also two (only one is visible in the drawings), is formed on an interior surface 72 bounding the cartridge-receiving chamber 66. The first ribs 70a,b and second ribs 71 are formed as indentations manifesting themselves as recesses in an exterior surface 74 of the beaker-shaped part.

Axial end faces of the first and second ribs 70a,b,71 are at a common axial position in the cartridge-receiving chamber 66 and thus able to support the second cartridge 61 axially, as will be explained. This is also why they are distributed at intervals of less than 180°, in this example at equal intervals, around the reference axis 65.

A respective venting passage 73a,b extends through each of the first ribs 70a,b. An inlet for gas is provided in the axial end face of the first rib 70a,b that is arranged to support the second cartridge 61. An outlet for gas is provided in the recess in the exterior surface 74.

A respective orienting part 75 is provided at the axial end of each second rib 71 proximal to the mouth of the cartridge-receiving chamber 66. The orienting part 75 in this example is a protruding pin. As it happens, the inlets of the venting passages 73a,b also function as orienting parts, as will be explained.

A resilient sealing element 76 is formed on an axial edge of the main part 62 that is located at the mouth of the cartridge-receiving chamber 66 in an assembled state of the third funnel 8. The resilient sealing element 76 presents a ribbed sealing surface 77 facing in an axial direction away from the edge on which the resilient sealing element 76 is formed.

The second cartridge 61 comprises a housing comprising a capping part 78 and a vessel-forming part 79, joined to each other to enclose a housing interior 80.

The capping part 78 is made in one piece. The vessel-forming part 79 is a multi-component part.

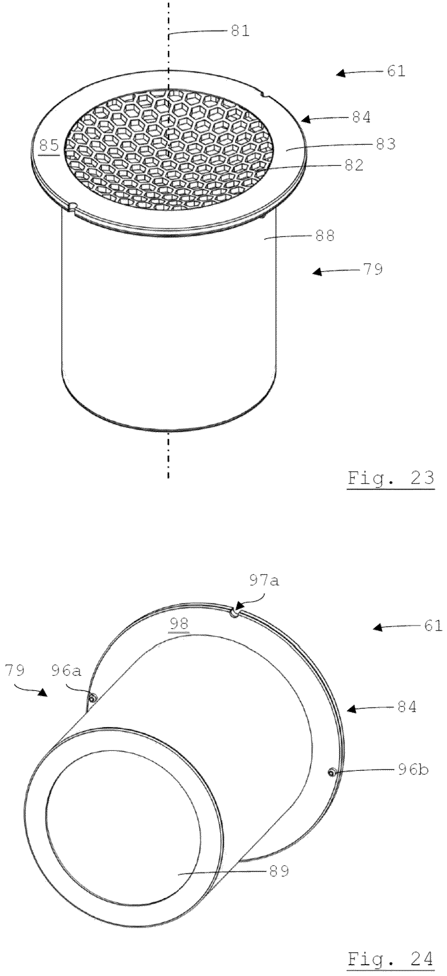

It is again convenient to define a cartridge axis 81 (Figs. 21, 23) as a reference axis. The cartridge axis 81 extends from an axial end of the housing at which the capping part 78 is provided to an opposite axial end of the housing.

The capping part 78 may be a moulded part or a part obtainable by additive manufacturing, for example. The capping part 78 is self-supporting. The capping part 78 has a fixed shape to which the capping part 78 returns when elastically deformed. That is to say that the capping part 78 is non-deformable.

The capping part 78 comprises a central part forming a screen 82 bulging inwards into the housing interior 80. The apertures in the screen 82 each form a liquid inlet for entry of liquid into the housing interior 80. An outer part 83 of the capping part 78 surrounding the screen 82 is partly comprised in a sealing rim 84 of the housing.

The outer capping part part 83 has a flat surface 85 facing away from the housing of the second cartridge 61 in an axial direction. This surface85 comprises a surface of engagement configured to engage the sealing surface 77 when the second cartridge 61 is in position in the cartridge-receiving chamber 66. The surface of engagement is closed on itself around the cartridge axis 81, enclosing and bounding a part of the exterior surface of the housing of the second cartridge 61 that includes the exterior surface of the screen 82.

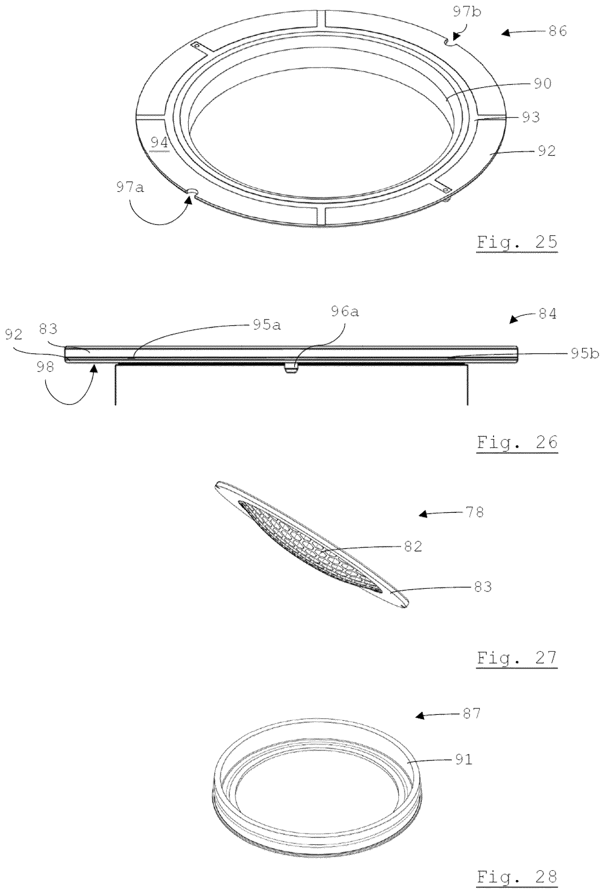

The vessel-forming part 79 comprises a first support part rim 86 (Fig. 25), a second support part rim 87 (Fig. 28), a first sheet 88 comprising at least one membrane and a second sheet 89 comprising at least one membrane.

The first support part rim 86 and the second support part rim 87 are both self-supporting support parts. The second support part rim 87 forms a base part located at an opposite axial and of the housing of the second cartridge 61 to the axial end at which the capping part 78 is provided.

The first and second sheets 88,89 are both liquid-pervious. The first and second sheets 88,89 consist of one or more porous membranes. These membranes may be made of nylon, for example. In an embodiment, the membranes are microfiltration membranes. As an example, the first and second sheets 88,89 may have a micron rating in the range of 0.1 - 5, implying that 99.9% of particles at or bigger than the micron rating will be stopped by the first and second sheets 88,89. In an embodiment, the first and second sheets 88,89 have a thickness in the range of 0.1 -0.5 mm, e.g. in the range of 0.1 - 0.3 mm. Mean flow pore (ASTM F316) can be in the range of 0.2 - 0.7, for example.

The first sheet 88 forms a lateral circumferential wall of the housing over a majority of the surface area of the lateral circumferential wall. Where this is the case, the housing interior 80 is only separated from an environment of the second cartridge 61 by the first sheet 88. The first sheet 88 is mounted to the first support part rim 86 along an axial edge of the first sheet 88 proximal to the capping part 78. Specifically, the first support part rim 86 comprises an axially extending section 90 closed on itself around the cartridge axis 81, to which the first sheet 88 is joined at an axial edge of the first sheet 88. The first sheet 88 is otherwise closed on itself around the cartridge axis 81.

The second sheet 89 forms a majority of a bottom wall of the housing. The second sheet 89 is mounted to the second support part rim 87 along a circumferential edge of the second sheet89. The second support part rim 87 is approximately annular in shape. The second sheet 89 is mounted across a central opening of the second support part rim 87. Thus, an outlet allowing liquid to flow out of the housing interior 80 is formed, in addition to the outlet formed by the liquid-pervious lateral circumferential wall in the form of the first sheet 88.

The second support part rim 87 also comprises an axially extending section 91 closed on itself around the cartridge axis 81, to which the first sheet 88 is joined at an axial edge of the first sheet 88 distal to the capping part 78.

There is no support structure interconnecting the first support part rim 86 and the second support part rim 87.

The housing interior 80 is filled with at least one liquid treatment medium (not shown), e.g. a liquid treatment for the treatment of liquid in a diffusive process. For present purposes this includes ion exchange, sorption and the entry into solution of minerals. The liquid treatment medium may be provided in the form of a bed of at least one granular material. If the first and second sheets 88,89 comprise one or more microfiltration membranes, the particles in the bed can be relatively fine. This allows the particles in the bed to be relatively fine without risk of contamination of the treated liquid. The material may in particular comprise ion exchange resin, e.g. weakly acidic cation exchange resin. In that case, a majority of the weakly acidic cation exchange resin will be in the hydrogen form prior to use. A minority may be in the potassium or sodium form for buffering purposes. The bed may additionally or alternatively comprise one or more sorbents, e.g. activated carbon or compounds for adsorbing heavy metals.

The vessel-forming part 79, in this case the first support part rim 86, comprises a flange 92, joined to the capping part 78 and at least partly comprised in the sealing rim 84. An annular groove 93 with radially extending branches is formed in an otherwise flat axial end surface 94 facing in an axial direction towards the capping part 78. The first support part rim 86 is joined to the capping part 78 at this axial end surface 94. An annular venting channel with branches extending outwards is thereby formed. At least one of the branches extends up to an outer edge of the flange 92 to define an inlet 95a,b (Fig. 26) for gas. Because an outer edge of the outer capping part part 83 is generally at the same radial location as an outer edge of the flange 92, the inlets 95a,b are in this case in the outer edge of the sealing rim 84. Alternatively, the outer capping part part 83 can extend further outwards (with respect to the cartridge axis 81) than the flange 92. The inlets 95a,b for gas will then be on a same side of the sealing rim 84 as the vessel-forming part 79 and an opposite side of the sealing rim 84 to the side on which the capping part 78 is located.

Shorter branches are closed at a distance from the outer edge of the flange 92, but for a respective connection to a hollow interior of a respective nipple 96a,b. Each of the nipples 96a,b protrudes from the sealing rim 84 in an axial direction towards an axial end of the housing opposite the axial end at which the capping part 78 is provided. Each nipple 96a,b is insertable into a respective one of the venting passages 73a,b in the first ribs 70a,b. The fit is relatively tight, so that the venting passages 73 are closed to liquid.

It will be appreciated that the protruding nipples 96a,b can only be inserted into the venting passages 73a,b in either of two rotary positions of the second cartridge 61. This is facilitated by notches 97a,b in a laterally outer edge of the sealing rim 84. The notches 97 are configured to engage a respective one of the orienting parts 75a,b.

The nipples 96a,b protrude from a surface 98 of the sealing rim 84, specifically the flange 92, facing in axial direction away from the capping part 78. This surface 98 is otherwise flat, to allow the second cartridge 61 to be supported axially by the end faces of the ribs 70a,b,71. Thus, in use, the sealing rim 84 is clamped between these end faces and the resilient sealing element 76. Untreated liquid can reach neither the gas inlets 95a,b nor the gas outlets defined at the ends of the protruding nipples 96a,b. Air in the space surrounding the second cartridge 61 in the cartridge-receiving chamber 66 can, however, reach the gas inlets 95a,b.

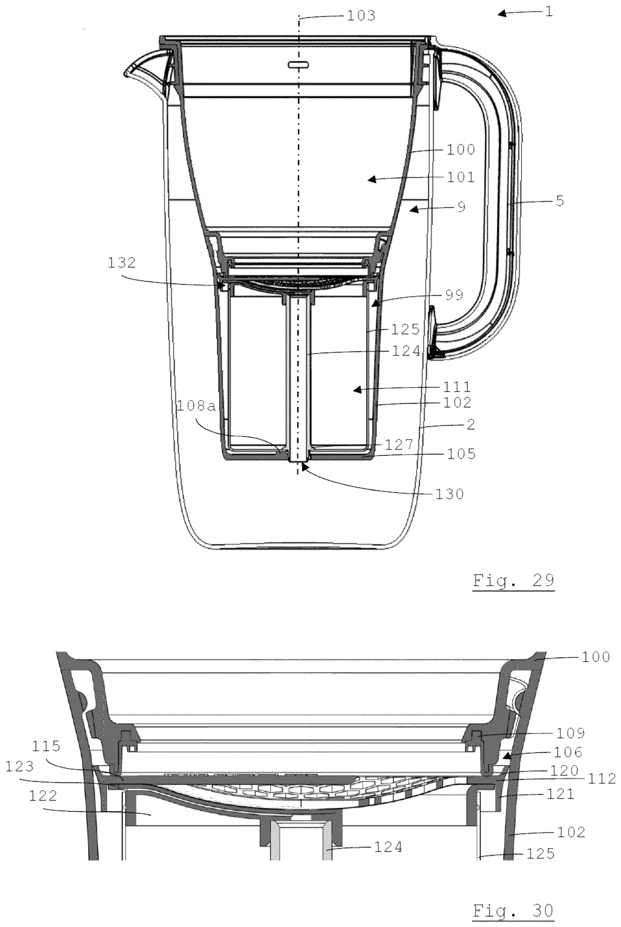

The fourth funnel 9 (Figs. 29-31) is configured for use with a third replaceable liquid treatment cartridge 99 (Figs. 29, 30 and 32-40). The fourth funnel 9 comprises a main part 100 comprising a reservoir 101. The fourth funnel 9 also comprises a beaker-shaped part 102.

It is again convenient to define a reference axis 103 (Fig. 29) for the fourth funnel 9. The main part 100 extends from one axial end to an axial end of reduced lateral dimensions at which the beaker-shaped part 102 is releasably attached to the main part 100. In the illustrated example, a threaded connection is provided. A bayonet connection or the like could be used instead. A sealing element may provide for a liquid-tight connection, if required.

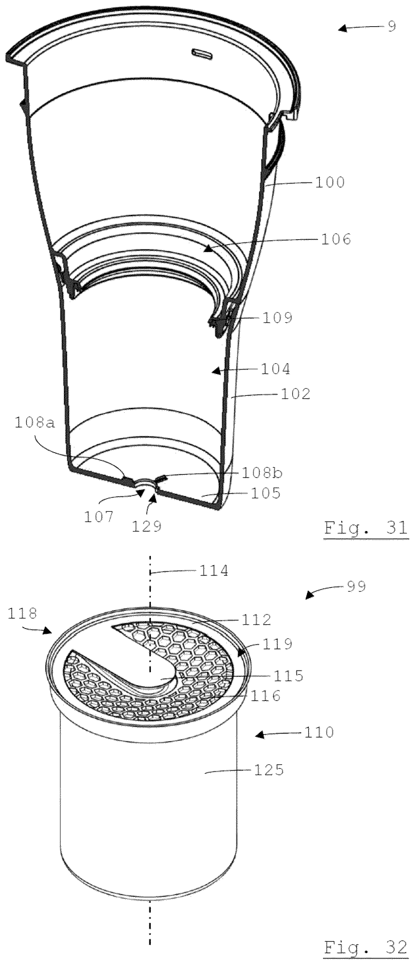

The beaker-shaped part 102 comprises a cartridge-receiving chamber 104. An interior of the cartridge-receiving chamber 104 is bounded at one axial end by an axial end wall 105. The cartridge-receiving chamber 104 has a mouth 106 at an opposite axial end. An outlet opening 107 (Fig. 31) through the axial end wall 105 allows liquid to flow out of the cartridge-receiving-chamber 104. In the illustrated embodiment, the third liquid treatment cartridge 99 is supported, in use, by support ribs 108a,b formed on an interior surface of the axial end wall 105. The support ribs 108a,b extend mainly in radial direction. Thus, treated liquid can reach the outlet opening 107, in use. In this example, the support ribs 108a,b extend in a straight line in radial direction. The support ribs 108a,b are located radially outwards of the outlet opening 107.

A resilient sealing element 109 (Fig. 30) is formed on an axial edge of the main part 100 that is located at the mouth of the cartridge-receiving chamber 104 in an assembled state of the fourth funnel 9. The resilient sealing element 109 presents a sealing surface facing in an axial direction away from the edge on which the resilient sealing element 109 is formed.

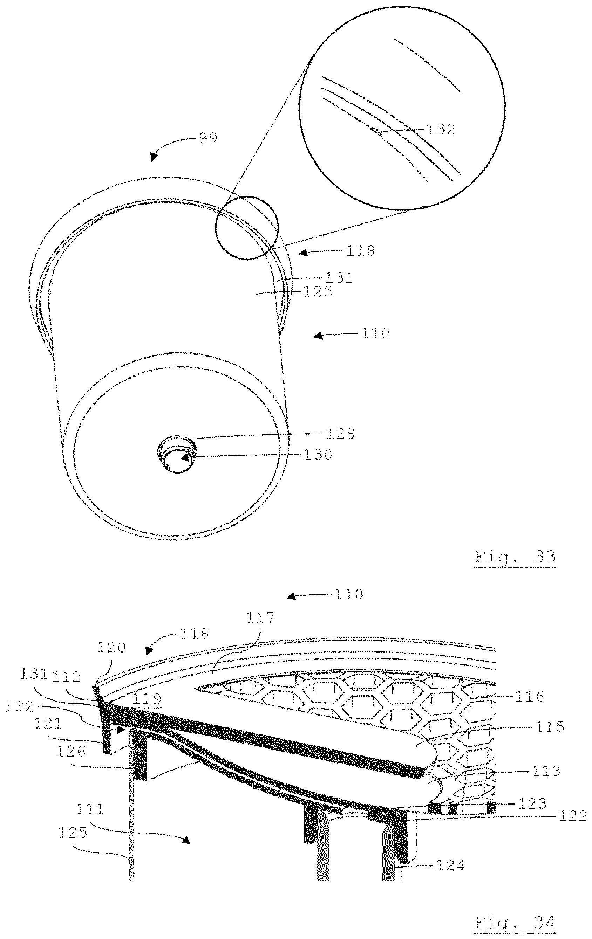

The third cartridge 99 comprises a housing comprising a capping part and a vessel-forming part 110, joined to each other to enclose a housing interior 111. The capping part is in this case a multi-component part comprising a main capping part 112 and a mesh 113 (Figs. 34, 38, 39). The vessel-forming part 110 is a multi-component part.

It is again convenient to define a cartridge axis 114 (Fig. 32) as a reference axis. The cartridge axis 114 extends from an axial end of the housing at which the main capping part 112 is provided to an opposite axial end of the housing.

The main capping part 112 may be a moulded part or a part obtainable by additive manufacturing, for example. The main capping part 112 is self-supporting. The main capping part 112 has a fixed shape to which the main capping part 112 returns when elastically deformed. That is to say that the main capping part 112 is non-deformable.

As illustrated, the main capping part 112 comprises a grip 115 for pulling the third cartridge 99 out of the cartridge-receiving chamber 104.

The main capping part 112 comprises a central part forming a screen 116 bulging inwards into the housing interior 111. The apertures in the screen 116 each form a liquid inlet for entry of liquid into the housing interior 111 through the mesh 113. An outer part 117 of the main capping part 112 surrounding the screen 116 is partly comprised in a sealing rim 118 of the housing.

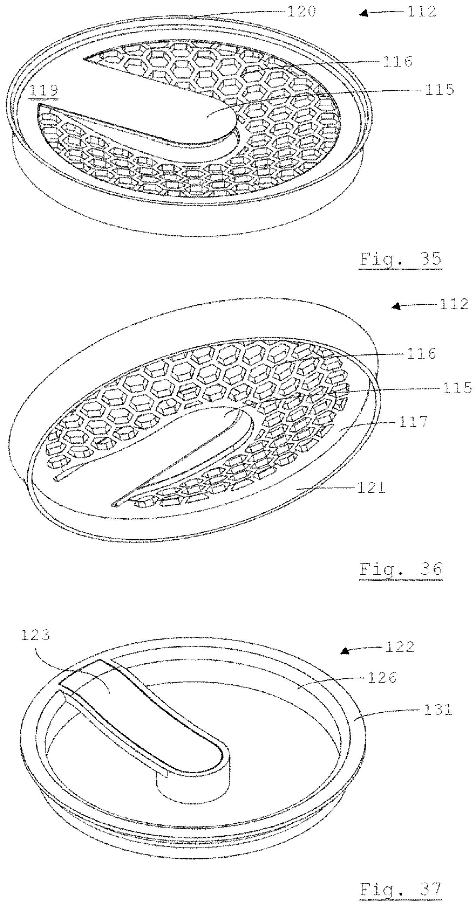

The outer capping part part 117 has a flat surface 119 (Figs. 34, 35) facing away from the housing of the third cartridge 99 in an axial direction. This surface 119 comprises a surface of engagement configured to engage the sealing surface of the resilient sealing element 109 when the third cartridge 99 is in position in the cartridge-receiving chamber 104. The surface of engagement is closed on itself around the cartridge axis 114, enclosing and bounding a part of the exterior surface of the housing of the third cartridge 99 that includes the exterior surface of the screen 116.

The illustrated third cartridge 99 has circumferential upper and lower sealing rim parts 120,121. They extend mainly in axial direction, but at an angle to the cartridge axis 114. The upper and lower sealing rim parts 120,121 present a lateral surface of the sealing rim 118, which faces mainly in radial direction but also at least partly in axial direction, namely an axial direction approaching an axial end of the housing opposite to the axial end at which the capping part is provided. This surface is not a sealing surface for preventing flow of liquid, however. The angled upper and lower sealing rim parts 120,121 serve mainly to centre the housing of the third cartridge 99 when inserted into the cartridge-receiving chamber 104.

The vessel-forming part 110 comprises a support structure comprising a support part 122, a cover part 123 and a hollow strut 124. The vessel-forming part 110 further comprises at least one sheet 125 comprising at least one membrane.

The support part 122, cover part 123 and hollow strut 124 are each self-supporting parts. They may be made in one piece. They can for example be moulded part, e.g. injection moulded parts.

The sheet 125 is liquid-pervious. The sheet 125 consist of one or more porous membranes. These membranes may be made of nylon, for example. In an embodiment, the membranes are microfiltration membranes. As an example, the sheet 125 may have a micron rating in the range of 0.1 - 5, implying that 99.9% of particles at or bigger than the micron rating will be stopped by the sheet 125. In an embodiment, the sheet 125 has a thickness in the range of 0.1 -0.5 mm, e.g. in the range of 0.1 - 0.3 mm. Mean flow pore (ASTM F316) can be in the range of 0.2 - 0.7, for example.

In the illustrated example, the sheet 125 is formed in the shape of a beaker, e.g. by deep drawing. The formed sheet 125 thus forms a lateral circumferential wall of the housing over a majority of the surface area of the lateral circumferential wall. Where this is the case, the housing interior 111 is only separated from an environment of the third cartridge 99 by the sheet 125. The sheet 125 is mounted to the support part 122 along an axial edge of the sheet 125 proximal to the main capping part 112. Specifically, the support part 122 comprises an axially extending section 126 closed on itself around the cartridge axis 114, to which the sheet 125 is joined at an axial edge of the sheet 125. The sheet 125 is otherwise closed on itself around the cartridge axis 114.

As illustrated, the sheet 125 also forms a majority of a bottom wall of the housing.

In a variant, the housing comprises at least two sheets, one forming the lateral circumferential wall and the other forming the bottom wall of the housing. Each may be constituted as the sheet 125 described above, and they may be joined together by adhesive or a welded joint, e.g. obtainable by thermal or ultrasonic welding.

The housing interior 111 is filled with at least one liquid treatment medium (not shown), e.g. a liquid treatment for the treatment of liquid in a diffusive process. For present purposes this includes ion exchange, sorption and the entry into solution of minerals. The liquid treatment medium may be provided in the form of a bed of at least one granular material. If the sheet 125 comprises one or more microfiltration membranes, the particles in the bed can be relatively fine. This allows the particles in the bed to be relatively fine without risk of contamination of the treated liquid. The material may in particular comprise ion exchange resin, e.g. weakly acidic cation exchange resin. In that case, a majority of the weakly acidic cation exchange resin will be in the hydrogen form prior to use. A minority may be in the potassium or sodium form for buffering purposes. The bed may additionally or alternatively comprise one or more sorbents, e.g. activated carbon or compounds for adsorbing heavy metals.

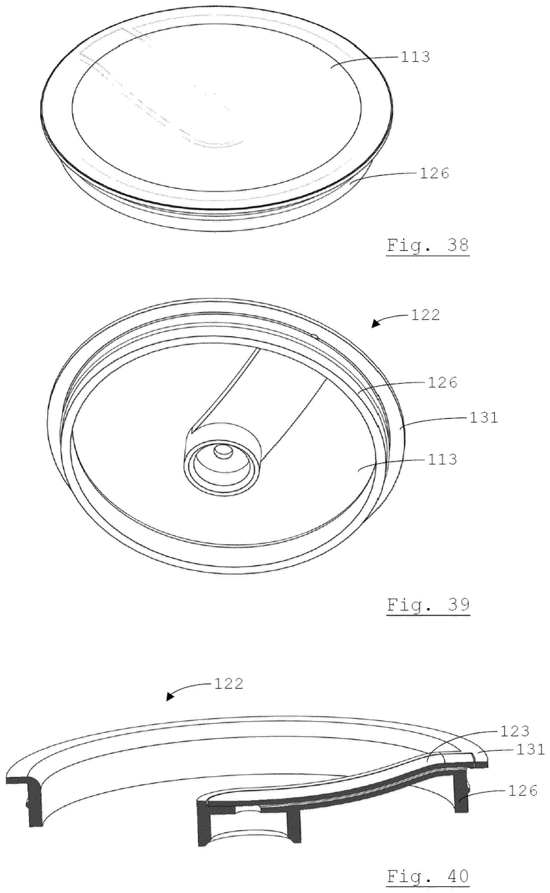

The sheet 125 is joined to a hollow strut flange 127 (Fig. 39) at an axial end of the hollow strut 124. The joint may be an adhesive joint or a joint obtainable by welding, e.g. ultrasonic or thermal welding.

At least the hollow strut flange 127 is supported axially by the support ribs 108a,b, in use. Thus, the remainder of the bottom wall of the housing of the third cartridge 99 can be formed only by the sheet 125, which is flexible. The force transmitted through the support structure, specifically the hollow strut 124 opposes the axially directed force exerted by the resilient sealing element 109.

An axial end of the hollow strut 124 distal to the main capping part 112 and on an opposite side in axial direction to the hollow strut flange 127 forms an axially protruding part 128 (Fig. 33) of the housing of the third cartridge 99.

The protruding part 128 is self-supporting. The protruding part 128 is shaped to conform to an outer edge of the outlet opening 107 of the cartridge-receiving chamber 104 along a majority of a circumference of the protruding part 128. This edge is interrupted to define a residual outlet opening 129 (Fig. 31) between the edge of the outlet opening 107 and a further section of the circumference of the protruding part 128. In a variant, there may be several such residual outlet openings 129. The area of the residual outlet opening 129 determines the rate of flow of liquid through the liquid treatment system 1.

Because the protruding part 128 is insertable into the outlet opening 107 to engage an edge of the outlet opening 107, the protruding part 128 contributes to aligning the cartridge axis 114 with the reference axis 103. This helps prevent skew and improves the seal provided by the sealing rim 118.

An interior of the of the protruding part 128 is hollow and open at a free axial end, being the axial end distal to a remainder of the housing of the first cartridge 99. Because the protruding part 128 is in effect an extension of the hollow strut 124, the hollow interior of the protruding part 128 is separated from the housing interior 111. Thus, liquid cannot enter the hollow interior of the protruding part 128.

An axial end of the protruding part 128 distal to a remainder of the housing of the third cartridge 99 corresponds to an outlet 130 (Fig. 33) of a venting channel extending through the housing. The hollow interior of the hollow strut 124 forms a section of this venting channel.

An axial end of the hollow strut 124 proximal to the main capping part 112 is received in a socket comprised in the support part 122. A further section of the venting channel opens into the socket and thereby the interior of the hollow strut 124. This further section is defined by a groove in the support part 122 and by the cover part 123, which closes the groove.

A axially facing surface of the outer capping part part 117 facing in opposite axial direction to the surface 119 facing away from the housing of the third cartridge 99 in an axial direction is joined to a support part flange 131, in this case with the mesh 113 interposed. The support part flange 131 protrudes laterally, in this example radially, with respect to the axially extending section 126 of the support part 122.

A gas inlet 132 (Figs. 33, 34) is formed at the sealing rim 118 where the support part flange 131 adjoins the axially extending section 126 of the support part 122. The sheet 125 either stops just short of the gas inlet 132 in axial direction towards the sealing rim 118 or is provided with an aperture aligned with the gas inlet 132.

Thus, in use, treated liquid emerges through the sheet 125 into the cartridge-receiving chamber 104. The liquid flows between the support ribs 108a,b to the residual outlet opening 129. The liquid flows through the residual outlet opening 129 into the jug 2. The liquid in the cartridge-receiving chamber 104 forces any gas in the cartridge-receiving chamber 104 up towards the sealing rim 118. This gas passes through the gas inlet 132 into the venting channel. The gas is expelled through the gas outlet 130 at the end of the protruding part 128 into the jug 2 in a head space above the level of the liquid collected in the jug 2. There is a separation of vented gas and liquid.

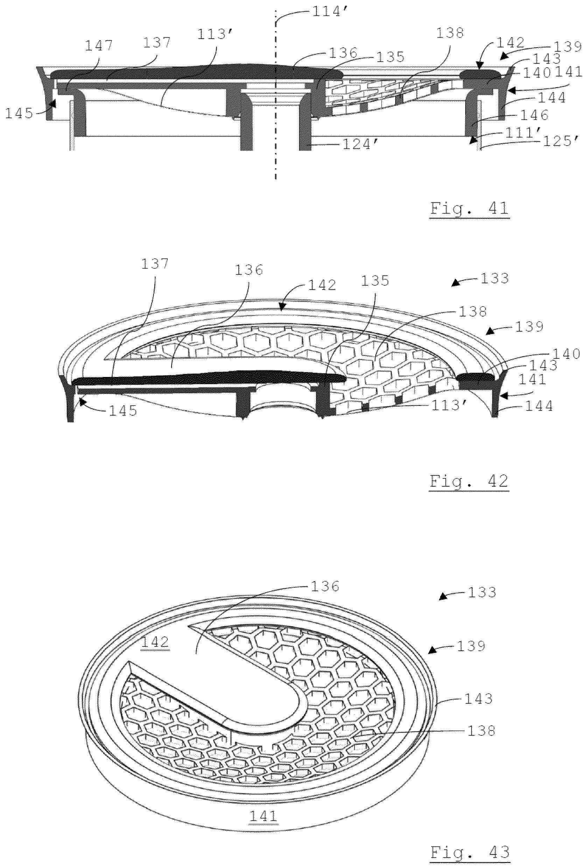

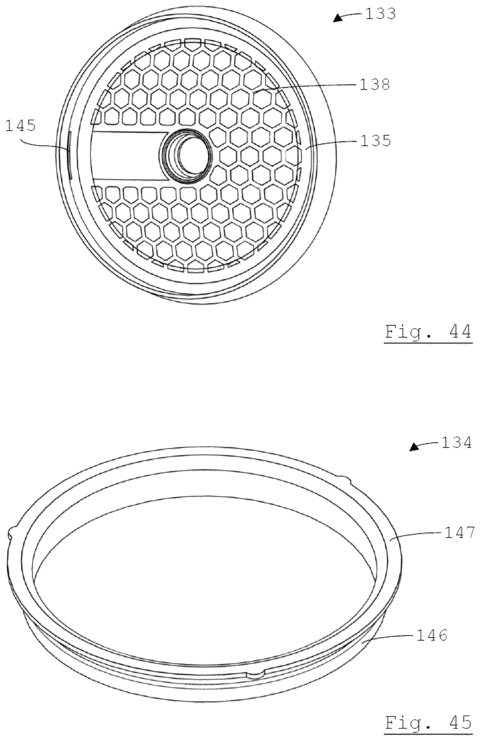

A variant (Figs. 41-45) of the third cartridge 99 differs only in comprising a different capping part 133 and a different support part 134.

The capping part 133 is a multi-part capping part 133 comprising a main capping part part 135 and a capping part cover part 136.

In the illustrated embodiment, each of the main capping part part 135 and the capping part cover part are self-supporting. They have a fixed shaped to which they return when elastically deformed. That is to say that they are non-deformable. In an alternative, the capping part cover part may be a foil supported by the main capping part part 135. In any case, the main capping part part 135 and the capping part cover part 136 are joined together to define a venting channel section 137 in between them. The venting channel section 137 is defined by a recess in a radially extending section of the main capping part part 135, which recess is covered by the capping part cover part 136. The joint may be an adhesive joint or a joint obtainable by welding, e.g. thermal or ultrasonic welding.

The capping part 133, specifically the main capping part part 135, comprises a screen 138 bulging inwards into the housing interior 111'. The apertures in the screen 138 each form a liquid inlet for entry of liquid into the housing interior 111'. A radially outer part of the main capping part part 135 is comprised in a sealing rim 139. This radially outer part comprises a flat annular section 140 and an adjoining section presenting a surface 141 of engagement for engaging the sealing surface 26 (Fig. 4) of the first funnel 6 or the sealing surface 59 of the third funnel 8. Alternatively, an alternative surface 141142 of engagement may be formed by a flat annular surface section of the capping part cover part 136, if the cartridge variant is to be used with the fourth funnel 9. In that case, circumferential upper and lower sealing rim parts 143,144 serve mainly to centre the cartridge housing. The upper and lower sealing rim parts 143,144 extend mainly in axial direction, but at an angle to the cartridge axis 114'.

An axial end of the hollow strut 124' proximal to the capping part 133 is received in a socket comprised in the main capping part part 135. The venting channel section 137 opens into the socket and thereby the interior of the hollow strut 124'. A gas inlet 145 is formed at, in this case in, the sealing rim 118 in the radially outer part of the main capping part part 135.

The support part 134 is self-supporting. The support part 134 thus has a fixed shaped to which the support part 134 returns when elastically deformed. That is to say that the support part 134 is non-deformable. In the illustrated version, the support part 134 is made in one piece, e.g. obtainable by injection-moulding or additive manufacturing.

The support part 134 comprises an axially extending section 146 and a flange 147. The support part 134 is joined to the main capping part part 135 at the flange 147, with the mesh 113' interposed. As a consequence, the flange 147 is comprised in the sealing rim 139.

The sheet 125' is joined to a radially outward-facing surface of the axially extending support part section 146 along an edge of the sheet 125' at an axial edge of the sheet 125'.

The invention is not limited to the embodiments described above, which may be varied within the scope of the accompanying claims. It is possible to provide the capping parts 18,78 with a mesh that bulges inwards into the housing interior 20,80, for example. It is then no longer necessary for the screens 22,82 to do so.

### List of reference numerals

- 1 -: Liquid treatment system
- 2 -: Jug
- 3 -: Lid
- 4 -: Closure element
- 5 -: Handle
- 6 -: 1^{st} Funnel
- 7 -: 2^{nd} Funnel
- 8 -: 3^{rd} Funnel
- 9 -: 4^{th} Funnel
- 10 -: Ring-shaped jug part
- 11 -: Cartridge-receiving chamber
- 12 -: Reservoir
- 13 -: Reference axis
- 14 -: Axial end wall
- 15 -: Mouth
- 16 -: Outlet opening
- 17 -: 1^{st} liquid treatment cartridge
- 18 -: Capping part
- 19 -: Vessel-forming part
- 20 -: Housing interior
- 21 -: Cartridge axis
- 22 -: Screen
- 23 -: Sealing rim
- 24 -: Flat annular section
- 25 -: Surface of engagement
- 26 -: Sealing surface
- 27 -: Proximal axial edge
- 28 -: Opposite axial edge
- 29 -: Support structure
- 30 -: Base cover part
- 31 -: 1^{st} sheet
- 32 -: 2^{nd} sheet
- 33 -: 1^{st} Strut
- 34a-c -: 2^{nd} Strut
- 35 -: 1^{st} support part rim
- 36 -: 2^{nd} support part rim
- 37 -: Radially outward-facing first rim surface
- 38 -: Axially outward-facing first rim surface
- 39 -: Flange
- 40 -: Recess
- 41 -: Gas inlet
- 42 -: Radially outward-facing second rim surface
- 43a-d -: Spoke parts
- 44 -: Axially outward-facing support structure surface
- 45 -: Base cover part rim
- 46a-d -: Spoke cover part
- 47 -: Central part
- 48 -: Protruding part
- 49 -: Residual outlet opening
- 50 -: Outlet for gas
- 51 -: Main part
- 52 -: Reservoir
- 53 -: Beaker-shaped part
- 54 -: Reference axis
- 55 -: Cartridge-receiving chamber
- 56 -: Axial end wall
- 57 -: Mouth
- 58 -: Outlet opening
- 59 -: Sealing surface
- 60 -: Lower axial edge
- 61 -: 2^{nd} cartridge
- 62 -: Main part
- 63 -: Reservoir
- 64 -: Beaker-shaped part
- 65 -: Reference axis
- 66 -: Cartridge-receiving chamber
- 67 -: Axial end wall
- 68 -: Mouth
- 69 -: Outlet opening
- 70a,b -: 1^{st} ribs
- 71 -: 2^{nd} rib
- 72 -: Interior surface
- 73a,b -: Venting passages
- 74 -: Exterior surface
- 75 -: Orienting part
- 76 -: Resilient sealing element
- 77 -: Sealing surface
- 78 -: Capping part
- 79 -: Vessel-forming part
- 80 -: Housing interior
- 81 -: Cartridge axis
- 82 -: Screen
- 83 -: Outer capping part part
- 84 -: Sealing rim
- 85 -: Capping part surface
- 86 -: 1^{st} support part rim
- 87 -: 2^{nd} support part rim
- 88 -: 1^{st} sheet
- 89 -: 2^{nd} sheet
- 90 -: Axially extending 1^{st} rim section
- 91 -: Axially extending 2^{nd} rim section
- 92 -: Flange
- 93 -: Annular groove
- 94 -: 1^{st} rim axial end surface
- 95a,b -: Gas inlets
- 96a,b -: Nipples
- 97a,b -: Notches
- 98 -: Supported flange surface
- 99 -: 3^{rd} liquid treatment cartridge
- 100 -: Main part
- 101 -: Reservoir
- 102 -: Beaker-shaped part
- 103 -: Reference axis
- 104 -: Cartridge-receiving chamber
- 105 -: Axial end wall
- 106 -: Mouth
- 107 -: Outlet opening
- 108a,b -: Support ribs
- 109 -: Resilient sealing element
- 110 -: Vessel-forming part
- 111,111' -: Housing interior
- 112 -: Main capping part
- 113,113' -: Mesh
- 114,114' -: Cartridge axis
- 115 -: Grip
- 116 -: Screen
- 117 -: Outer capping part part
- 118 -: Sealing rim
- 119 -: Capping part surface
- 120 -: Upper sealing rim part
- 121 -: Lower sealing rim part
- 122 -: Support part
- 123 -: Cover part
- 124,124' -: Hollow strut
- 125,125' -: Sheet
- 126 -: Axially extending support part section
- 127 -: Hollow strut flange
- 128 -: Protruding part
- 129 -: Residual outlet opening
- 130 -: Gas outlet
- 131 -: Support part flange
- 132 -: Gas inlet
- 133 -: Capping part
- 134 -: Support part
- 135 -: Main capping part part
- 136 -: Capping part cover part
- 137 -: Venting channel section
- 138 -: Screen
- 139 -: Sealing rim
- 140 -: Annular main capping part part section
- 141 -: Engagement surface
- 142 -: Alternative engagement surface
- 143 -: Upper sealing rim part
- 144 -: Lower sealing rim part
- 145 -: Gas inlet
- 146 -: Axially extending support part section
- 147 -: Support part flange

## Claims

1. Liquid treatment cartridge, comprising
a housing comprising a capping part (18;78;112,113;133) and a vessel-forming part (19;79;110), joined to each other to enclose a housing interior (20;80;111;111'),
wherein the housing comprises a laterally protruding circumferential rim (23;84;118;139),
wherein at least the vessel-forming part (19;79;110) is placeable in a cartridge-receiving chamber (11;55;66;104) of a liquid treatment system (1) such that the rim (23;84;118;139) engages a co-operating part (26;59;77;109) of the liquid treatment system (1) along a surface (25;141,142) of engagement of the rim (23;84;118;139) to prevent a flow of liquid through a mouth (15;57;68;106) of the cartridge-receiving chamber (11;55;66;104) past the housing of the liquid treatment cartridge,
wherein the surface (25;141,142) of engagement extends in a loop around an axis (21,81;114;114') of the housing extending from an axial end of the housing at which the capping part (18;78;112,113) is provided to an opposite axial end of the housing,
wherein the surface (25;141,142) of engagement encloses part of an exterior surface of the housing,
wherein the capping part (18;78;112,113) comprises at least one liquid inlet for entry of liquid into the housing interior (20;80;111;111') through the enclosed exterior surface part,
wherein the housing comprises at least one venting channel, having at least one inlet (41;95a,b;132;145) for gas through the exterior surface at the rim (23;84;118) and at least one outlet (50;96a,b;130) for gas, and
wherein the at least one inlets (41;95a,b;132;145) for gas are located outside the enclosed part of the exterior surface,
**characterised in that**
the at least one outlets (50;96a,b;130) for gas are separated from the enclosed part of the exterior surface by at least one of the surface (25;141,142) of engagement and the housing.

2. Liquid treatment cartridge according to claim 1,
wherein at least one of the at least one venting channels extends through at least one part of the housing to at least one outlet (50;130) at the axial end of the housing opposite the axial end at which the capping part (18;78;112,113) is provided.

3. Liquid treatment cartridge according to claim 1 or 2,
wherein the housing comprises at least one sheet (31,32;88,89;125) comprising at least one membrane, and
wherein the sheet (31,32;88,89;125) forms at least a section of a wall of the housing.

4. Liquid treatment cartridge according to claim 3,
wherein the housing comprises at least one support part (29,30;86,87;122,124;134,124'), which is self-supporting, and
wherein at least one of the sheets (31,32;88,89;125;125') is mounted along at least part of an edge of the sheet (31,32;88,89) to at least one of (i) at least one of the at least one support parts (29,30;86,87;122;134) and (ii) a part (30) fixed to and covering a surface of at least one of the at least one support parts (29).

5. Liquid treatment cartridge according to claim 4,
wherein the at least one support parts (29,30;86,87) comprise at least one support part (29) comprising at least one strut (33,34a-c;124;124') extending in axial direction over a majority of an axial extent of the housing.

6. Liquid treatment cartridge according to claim 5,
wherein at least one of the at least one struts (33,34a-c;124; 124') has a hollow interior forming at least a section of at least one of the at least one venting channels.

7. Liquid treatment cartridge according to any one of the preceding claims,
wherein the vessel-forming part (19;79;110) comprises a flange (39;92;131;147), joined to the capping part (18;78;112,113;133) and at least partly comprised in the rim (23;84;118;139).

8. Liquid treatment cartridge according to claim 7,
wherein at least a section of at least one of the at least one venting channels is formed between the flange (39;92) and the capping part (18;78).

9. Liquid treatment cartridge according to any one of the preceding claims,
wherein the housing comprises at least one protruding part (48;96a,b;128) for engaging a wall (14;56;105) of the cartridge-receiving chamber (11;55;104), e.g. for insertion into at least one of an aperture (16;58) and a passage (73a,b) through the wall (14;56) of the cartridge-receiving chamber (11;55;104).

10. Liquid treatment cartridge according to claim 9,
wherein the at least one protruding part (48;96a,b) comprises a protruding part (48;96a,b) protruding in an axial direction.

11. Liquid treatment cartridge according to claim 9 or 10,
wherein the protruding part (48;96a,b) is a hollow protruding part (48;96a,b).

12. Liquid treatment cartridge according to claim 11,
wherein an interior of the hollow protruding part (48;96a,b) is open at an axial end of the hollow protruding part (48;96a,b) distal to a remainder of the housing.

13. Liquid treatment cartridge according to claim 12,
wherein at least one outlet (50) of at least one of the at least one venting channels opens into the interior of the hollow protruding part (48), or
wherein the axial end of the hollow protruding part (48;96a,b) distal to a remainder of the housing corresponds to a respective one of the at least one outlets (50;130) of at least one of the at least one venting channels.

14. Liquid treatment system, comprising:
a replaceable liquid treatment cartridge (17;61) according to any one of the preceding claims; and
a reservoir part (6;7;8) comprising a reservoir for receiving liquid to be treated and a cartridge-receiving chamber (11;55;66;104), the cartridge-receiving chamber (11;55;66;104) having a mouth (15;57;68;106) proximal to the reservoir and at least one chamber outlet (16,49;58;69) allowing liquid to flow out of the cartridge-receiving chamber (11;55;66;104),
wherein the reservoir part comprises a cartridge seat comprising at least one part (26;59;77) for engaging the rim (23;84;118;139) of the liquid treatment cartridge (17;61) along the surface of engagement (25) to prevent a flow of liquid from the reservoir through the mouth (15;57;68) of the cartridge-receiving chamber (11;55;66;104) past the housing of the liquid treatment cartridge (17;61).

15. Liquid treatment system according to claim 14,
wherein the liquid treatment cartridge (17;61) is a liquid treatment cartridge according to claim 9, and
wherein a wall (14;56) of the cartridge-receiving chamber (11;55;104) comprises at least one of an aperture (16;58) and a passage (73a,b) through the wall (14;56) into which a respective one of the at least one protruding parts (48;96a,b) of the housing of the liquid treatment cartridge is insertable.
